# EUROPEAN PATENT APPLICATION

(11) **EP 4 801 148 A1**
(43) Date of publication of application: **02.09.2026**
(21) Application number: 24894399.5
(22) Date of filing: 25.10.2024
(51) Int. Cl.: H04W 72/0446, H04W 56/00, H04W 72/0453, H04W 76/14, H04W 84/12

(54) **AUDIO DATA TRANSMISSION AND RECEPTION METHOD AND DEVICE**

(30) Priority: 20.11.2023 KR 20230161577
(71) Applicant: Samsung Electronics Co., Ltd., Suwon-si, Gyeonggi-do 16677 (KR)
(72) Inventor: OH, Hyunseob, Suwon-si, Gyeonggi-do 16677 (KR); AN, Kisoo, Suwon-si, Gyeonggi-do 16677 (KR); PARK, Junha, Suwon-si, Gyeonggi-do 16677 (KR)
(74) Representative: Gulde & Partner
(86) International application number: PCT/KR2024/016396
(87) International publication number: WO 2025/110505

(57) **Abstract**

Various embodiments of the present disclosure relate to an audio data transmission and reception method and device. An electronic device, according to one embodiment, comprises: a communication circuit; a processor; and a memory for storing instructions. The instructions stored in the memory, when executed by the processor, cause the electronic device to perform at least: discovering a plurality of external electronic devices included in a neighbor awareness networking (NAN) cluster by carrying out NAN service discovery in a discovery window (DW); establishing an NAN data path (NDP) session with each of the plurality of external electronic devices in a first frequency band; periodically allocating the DW in a second frequency band and scheduling a radio resource for allocating an audio data transmission interval for transmitting audio data to the plurality of external electronic devices through the respective NDP sessions in the first frequency band; carrying out NAN synchronization and the NAN service discovery in the DW; and transmitting the audio data to the plurality of external electronic devices through the respective NDP sessions in the audio data transmission interval.

## Description

### [Technical Field]

Various embodiments of the disclosure relate to a method and a device for transmitting and receiving audio data.

### [Background Art]

With the advancement of technology, electronic devices capable of wireless communication, such as portable communication devices, for example smartphones, and portable multimedia devices, have emerged, and existing electronic devices, for example TVs, speakers, and earphones, have also evolved to perform wireless communication. Accordingly, electronic devices have become capable of providing new forms of services by using new technologies.

Recently, the human-centered Internet has evolved into a network between Things, that is, the Internet of Things (IoT), and furthermore, the Internet of Everything (IoE), in which cloud computing, big data processing technology, and the like are combined with IoT technology, has emerged. Accordingly, technologies for performing direct communication between devices have been studied.

Such direct communication between devices may be utilized in various fields. More specifically, direct communication between devices may be utilized for transmitting and receiving audio data between audiovisual (AV) devices. One-to-one communication may be performed between one device and another device, one-to-many communication may be performed between one device and a plurality of devices, and many-to-many communication may be performed between a plurality of devices and a plurality of devices.

In this regard, there is a need for a technology for transmitting and receiving audio data that is robust against changes in network topology while maintaining audio synchronization between a transmitting device that transmits audio data and a receiving device that receives the audio data. In addition, there is a need for a technology for transmitting and receiving audio data that can provide adaptive synchronization reflecting a user's location and spatial characteristics, as well as high-quality audio.

### [Disclosure of Invention]

### [Technical Problem]

Various embodiments of the disclosure provide an audio data transmission/reception device and method.

The technical problems to be solved in the disclosure are not limited to the technical problems mentioned above, and other technical problems not mentioned may be clearly understood by those skilled in the art to which the disclosure belongs from the descriptions below.

### [Solution to Problem]

An electronic device according to an embodiment of the disclosure may include: a communication circuit; a processor; and a memory storing instructions, wherein the instructions stored in the memory may, when executed by the processor, cause the electronic device to perform at least: discovering a plurality of external electronic devices included in a neighbor awareness networking (NAN) cluster by performing an NAN service discovery in a discovery window (DW), establishing respective NAN data path (NDP) sessions with the plurality of external electronic devices in a first frequency band, scheduling a radio resource to periodically allocate the DW in a second frequency band and allocate audio data transmission periods for transmitting audio data to the plurality of external electronic devices through the respective NDP sessions in the first frequency band, performing NAN synchronization and the NAN service discovery in the DW, and transmitting the audio data to the plurality of external electronic devices through the respective NDP sessions in the audio data transmission periods.

A method of an electronic device according to an embodiment of the disclosure may include: discovering a plurality of external electronic devices included in a neighbor awareness networking (NAN) cluster by performing an NAN service discovery in a discovery window (DW); establishing respective NAN data path (NDP) sessions with the plurality of external electronic devices in a first frequency band; scheduling a radio resource to periodically allocate the DW in a second frequency band and allocate audio data transmission periods for transmitting audio data to the plurality of external electronic devices through the respective NDP sessions in the first frequency band; performing NAN synchronization and the NAN service discovery in the DW; and transmitting the audio data to the plurality of external electronic devices through the respective NDP sessions in the audio data transmission periods.

An external electronic device according to an embodiment of the disclosure may include: a communication circuit; a processor; and a memory storing instructions, wherein the instructions stored in the memory may, when executed by the processor, cause the external electronic device to perform at least: discovering an electronic device included in a neighbor awareness networking (NAN) cluster by performing an NAN service discovery in a discovery window (DW), establishing an NAN data path (NDP) session with the electronic device, obtaining a timing synchronization function (TSF) value by receiving a synchronization signal from the electronic device in the DW, obtaining a fine time measurement (FTM) value by performing an FTM procedure with the electronic device, and performing playback time alignment of an audio signal, based on the TSF value and the FTM value.

A method of an external electronic device according to an embodiment of the disclosure may include: discovering an electronic device included in a neighbor awareness networking (NAN) cluster by performing an NAN service discovery in a discovery window (DW); establishing an NAN data path (NDP) session with the electronic device; obtaining a timing synchronization function (TSF) value by receiving a synchronization signal from the electronic device in the DW; obtaining a fine time measurement (FTM) value by performing an FTM procedure with the electronic device; and performing playback time alignment of an audio signal, based on the TSF value and the FTM value.

### [Advantageous Effects of Invention]

According to an embodiment of the disclosure, there are provided a method and a device for transmitting and receiving audio data that are robust to a change in network topology while maintaining audio synchronization.

According to an embodiment of the disclosure, there are provided a method and a device for transmitting and receiving audio data that can provide high-quality audio and adaptive synchronization reflecting a user position and spatial characteristics.

Advantageous effects obtainable from the disclosure are not limited to the above-mentioned advantageous effects, and other advantageous effects not mentioned herein will be clearly understood by those skilled in the art from the following description.

### [Brief Description of Drawings]

FIG. 1 is a block diagram of an electronic device in a network environment according to an embodiment.
FIG. 2 illustrates a neighbor awareness network (NAN) cluster according to an embodiment.
FIG. 3 is a block diagram of an electronic device according to an embodiment.
FIG. 4 illustrates a network topology of an NAN cluster according to an embodiment.
FIG. 5 is a flowchart illustrating an audio data transmission method according to an embodiment.
FIG. 6 illustrates a scheduling method according to an embodiment.
FIG. 7 illustrates a scheduling method according to an embodiment.
FIG. 8 illustrates a scheduling method according to an embodiment.
FIG. 9 illustrates a scheduling method according to an embodiment.
FIG. 10 illustrates a scheduling method according to an embodiment.
FIG. 11 illustrates a scheduling method according to an embodiment.
FIG. 12 illustrates subslot scheduling according to an embodiment.
FIG. 13 illustrates subslot scheduling according to an embodiment.
FIG. 14 illustrates subslot scheduling according to an embodiment.
FIG. 15 illustrates changing a priority when radio resources allocated to different NDP sessions overlap according to an embodiment.
FIG. 16 illustrates an access category according to an embodiment.
FIG. 17 illustrates an interface of an electronic device according to an embodiment.
FIG. 18 illustrates a command according to an embodiment.
FIG. 19 illustrates a command according to an embodiment.
FIG. 20 illustrates audio alignment in a framework according to an embodiment.
FIG. 21 illustrates audio alignment in an audio player according to an embodiment.
FIG. 22 is a block diagram of an external electronic device according to an embodiment.

### [Best Mode for Carrying out the Invention]

An electronic device according to an embodiment of the disclosure may include a communication circuit, a processor, and a memory storing instructions, wherein the instructions stored in the memory may, when executed by the processor, cause the electronic device to perform at least: discovering a plurality of external electronic devices included in an NAN cluster by performing a neighbor awareness networking (NAN) service discovery in a discovery window (DW), establishing respective NAN data path (NDP) sessions with the plurality of external electronic devices in a first frequency band, scheduling a radio resource to periodically allocate the DW in a second frequency band and to allocate an audio data transmission period for transmitting audio data to the plurality of external electronic devices through the respective NDP sessions in the first frequency band, performing NAN synchronization and the NAN service discovery in the DW, and transmitting the audio data to the plurality of external electronic devices through the respective NDP sessions in the audio data transmission period.

In an embodiment, the instructions stored in the memory may, when executed by the processor, cause the electronic device to perform scheduling the radio resource such that a transmission interval of the audio data is identical in the respective NDP sessions, based on at least one of a number of NDP sessions, a size of the audio data, and a type of the audio data.

In an embodiment, the instructions stored in the memory may, when executed by the processor, cause the electronic device to perform scheduling the radio resource such that the audio data transmission period overlaps for at least some of the respective NDP sessions.

In an embodiment, the instructions stored in the memory may, when executed by the processor, cause the electronic device to perform scheduling the radio resource to communicate with an external electronic device not included in the NAN cluster or to provide a service irrelevant to an NAN service by using at least one of the first frequency band and the second frequency band in a period in which no audio data is transmitted and which is not the DW.

In an embodiment, the instructions stored in the memory may, when executed by the processor, cause the electronic device to perform changing a priority for at least some of the respective NDP sessions in the overlapping period, based on an access category.

In an embodiment, the first frequency band may be a 5 GHz band or a 6 GHz band, and the second frequency band may be a 2.4 GHz band.

In an embodiment, the instructions stored in the memory may, when executed by the processor, cause the electronic device to perform scheduling the radio resource to allocate an additional DW in a third frequency band, performing the NAN synchronization and the NAN service discovery in the additional DW by switching the communication circuit from the first frequency band to the third frequency band in a period in which the additional DW is allocated, and transmitting the audio data to the plurality of external electronic devices through the respective NDP sessions in the audio data transmission period by switching the communication circuit from the third frequency band to the first frequency band in a period after the additional DW.

In an embodiment, the instructions stored in the memory may, when executed by the processor, cause the electronic device to perform establishing the respective NDP sessions with the plurality of external electronic devices in the first frequency band and the second frequency band and scheduling the radio resource to periodically allocate the DW in each of the second frequency band and the third frequency band and to allocate an audio data transmission period for transmitting the audio data to the plurality of external electronic devices through the respective NDP sessions in the first frequency band and the second frequency band.

In an embodiment, the electronic device may perform performing the NAN synchronization and the NAN service discovery in the DW by switching the communication circuit from the first frequency band to the third frequency band in a period in which the DW is allocated and transmitting the audio data to the plurality of external electronic devices through the respective NDP sessions in the audio data transmission period by switching the communication circuit from the third frequency band to the first frequency band in a period after the DW.

In an embodiment, the scheduling may be performed in units of a slot, the slot may include a plurality of subslots, and the instructions stored in the memory may, when executed by the processor, cause the electronic device to perform allocating an idle subslot in which audio data for a first external electronic device is not transmitted to a second external electronic device by performing scheduling in units of a subslot when a period in which transmission of the audio data is not scheduled occurs in a slot allocated to the first external electronic device.

In an embodiment, the instructions stored in the memory may, when executed by the processor, cause the electronic device to perform retransmitting the audio data in the idle subslot by performing scheduling in units of the subslot when the transmission of the audio data fails in the slot allocated to the first external electronic device.

A method for an electronic device according to an embodiment of the disclosure may include: discovering a plurality of external electronic devices included in an NAN cluster by performing a neighbor awareness networking (NAN) service discovery in a discovery window (DW), establishing respective NAN data path (NDP) sessions with the plurality of external electronic devices in a first frequency band, scheduling a radio resource to periodically allocate the DW in a second frequency band and to allocate an audio data transmission period for transmitting audio data to the plurality of external electronic devices through the respective NDP sessions in the first frequency band, performing NAN synchronization and the NAN service discovery in the DW, and transmitting the audio data to the plurality of external electronic devices through the respective NDP sessions in the audio data transmission period.

In an embodiment, the scheduling of the radio resource may include scheduling the radio resource such that a transmission interval of the audio data is identical in the respective NDP sessions, based on at least one of a number of NDP sessions, a size of the audio data, and a type of the audio data.

In an embodiment, the scheduling of the radio resource may include scheduling the radio resource such that the audio data transmission period overlaps for at least some of the respective NDP sessions.

In an embodiment, the scheduling of the radio resource may include scheduling the radio resource to communicate with an external electronic device not included in the NAN cluster or to provide a service irrelevant to an NAN service by using at least one of the first frequency band and the second frequency band in a period in which no audio data is transmitted and which is not the DW.

In an embodiment, the method may further include changing a priority for at least some of the respective NDP sessions in the overlapping period, based on an access category.

In an embodiment, the first frequency band may be a 5 GHz band or a 6 GHz band, and the second frequency band may be a 2.4 GHz band.

In an embodiment, the scheduling of the radio resource may include scheduling the radio resource to allocate an additional DW in a third frequency band, and the method may further include performing the NAN synchronization and the NAN service discovery in the additional DW by switching a communication circuit from the first frequency band to the third frequency band in a period in which the additional DW is allocated, and transmitting the audio data to the plurality of external electronic devices through the respective NDP sessions in the audio data transmission period by switching the communication circuit from the third frequency band to the first frequency band in a period after the additional DW.

In an embodiment, the establishing of the NDP sessions may include establishing the respective NDP sessions with the plurality of external electronic devices in the first frequency band and the second frequency band, the scheduling of the radio resource may include scheduling the radio resource to periodically allocate the DW in each of the second frequency band and the third frequency band and to allocate an audio data transmission period for transmitting the audio data to the plurality of external electronic devices through the respective NDP sessions in the first frequency band and the second frequency band, the performing of the NAN synchronization and the NAN service discovery may include performing the NAN synchronization and the NAN service discovery in the DW by switching the communication circuit from the first frequency band to the third frequency band in a period in which the DW is allocated, and the transmitting of the audio data may include transmitting the audio data to the plurality of external electronic devices through the respective NDP sessions in the audio data transmission period by switching the communication circuit from the third frequency band to the first frequency band in a period after the DW.

In an embodiment, the scheduling may be performed in units of a slot, the slot may include a plurality of subslots, and the method may further include allocating an idle subslot in which audio data for a first external electronic device is not transmitted to a second external electronic device by performing scheduling in units of a subslot when a period in which transmission of the audio data is not scheduled occurs in a slot allocated to the first external electronic device.

In an embodiment, the method may further include retransmitting the audio data in the idle subslot by performing scheduling in units of the subslot when the transmission of the audio data fails in the slot allocated to the first external electronic device.

An external electronic device according to an embodiment of the disclosure may include: a communication circuit; a processor; and a memory storing instructions, wherein the instructions stored in the memory may, when executed by the processor, cause the external electronic device to perform at least discovering an electronic device included in a neighbor awareness networking (NAN) cluster by performing an NAN service discovery in a discovery window (DW), establishing an NAN data path (NDP) session with the electronic device, obtaining a timing synchronization function (TSF) value by receiving a synchronization signal from the electronic device in the DW, obtaining an FTM value by performing a fine time measurement (FTM) procedure with the electronic device, and performing playback time alignment of an audio signal, based on the TSF value and the FTM value.

In an embodiment, the instructions stored in the memory may, when executed by the processor, cause the external electronic device to perform, by a framework of the external electronic device, obtaining a local time, directly receiving the TSF value and the FTM value from a Wi-Fi driver or Wi-Fi firmware through a first interface, obtaining a new ESCR value, based on the local time and the TSF value, obtaining an average latency, based on the FTM value, obtaining a present time stamp (PTS) value, based on the new ESCR value and the average latency, and determining a playback time of the audio signal, based on a PTS.

In an embodiment, the instructions stored in the memory may, when executed by the processor, cause the external electronic device to perform: by the framework of the external electronic device, obtaining a local time, directly receiving the TSF value and the FTM value from the Wi-Fi driver or Wi-Fi firmware through a first interface, calibrating a current clock reference, and transmitting the TSF value, the FTM value, and an updated current time to a player; and by the player of the external electronic device, receiving the TSF value, the FTM value, and the updated current time from the framework, obtaining a new ESCR value, based on the updated current time and the TSF value, obtaining an average latency, based on the FTM value, obtaining a present time stamp (PTS) value, based on the new ESCR value and the average latency, and determining a playback time of the audio signal, based on a PTS.

A method for an external electronic device according to an embodiment of the disclosure may include: discovering an electronic device included in a neighbor awareness networking (NAN) cluster by performing an NAN service discovery in a discovery window (DW); establishing an NAN data path (NDP) session with the electronic device; obtaining a timing synchronization function (TSF) value by receiving a synchronization signal from the electronic device in the DW; obtaining an FTM value by performing a fine time measurement (FTM) procedure with the electronic device; and performing playback time alignment of an audio signal, based on the TSF value and the FTM value.

In an embodiment, the performing of the playback time alignment of the audio signal may include, by a framework of the external electronic device, obtaining a local time, directly receiving the TSF value and the FTM value from a Wi-Fi driver or Wi-Fi firmware through a first interface, obtaining a new ESCR value, based on the local time and the TSF value, obtaining an average latency, based on the FTM value, obtaining a present time stamp (PTS) value, based on the new ESCR value and the average latency, and determining a playback time of the audio signal, based on a PTS.

In an embodiment, the performing of the playback time alignment of the audio signal may include: by the framework of the external electronic device, obtaining a local time, directly receiving the TSF value and the FTM value from the Wi-Fi driver or Wi-Fi firmware through a first interface, calibrating a current clock reference, and transmitting the TSF value, the FTM value, and an updated current time to a player; and by the player of the external electronic device, receiving the TSF value, the FTM value, and the updated current time from the framework, obtaining a new ESCR value, based on the updated current time and the TSF value, obtaining an average latency, based on the FTM value, obtaining a present time stamp (PTS) value, based on the new ESCR value and the average latency, and determining a playback time of the audio signal, based on a PTS.

### [Mode for the Invention]

Hereinafter, embodiments of the present disclosure will be described in detail with reference to the accompanying drawings.

In describing the embodiments, descriptions of technical matters that are well known in the technical field to which the present disclosure pertains and are not directly related to the present disclosure will be omitted. This is to avoid obscuring the gist of the present disclosure with unnecessary descriptions and to more clearly convey the present disclosure.

For the same reason, some components in the accompanying drawings are exaggerated, omitted, or schematically illustrated. In addition, the size of each component does not entirely reflect its actual size. In each drawing, the same or corresponding components are assigned the same reference numerals.

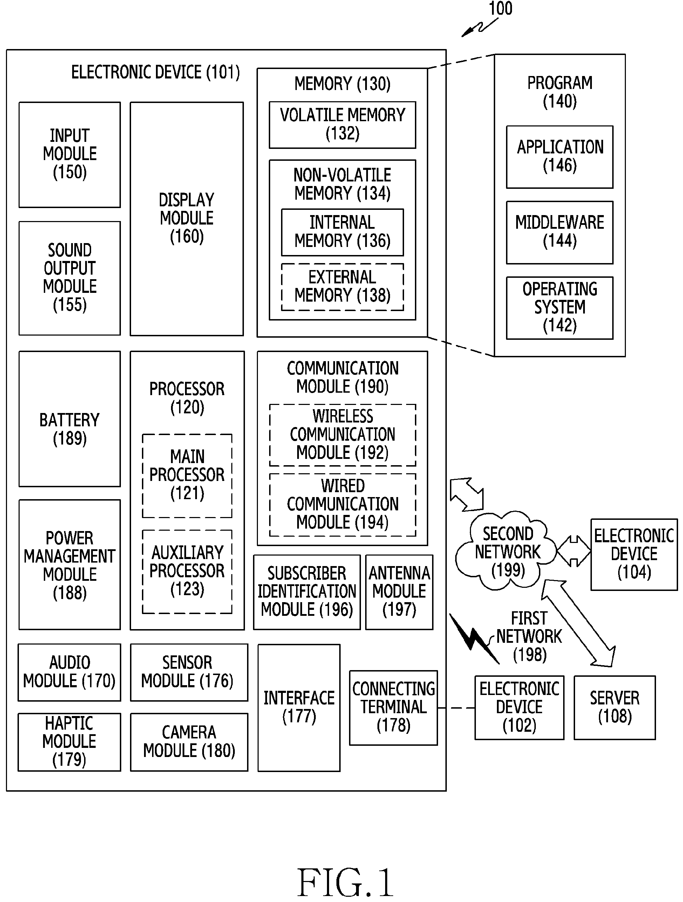

FIG. 1 is a block diagram of an electronic device in a network environment according to an embodiment.

FIG. 1 is a block diagram illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit, a neural processing unit (NPU), an image signal processor, a sensor hub processor, or a communication processor) that is operable independently from, or in conjunction with, the main processor 121. For example, when the electronic device 101 includes the main processor 121 and the auxiliary processor 123, the auxiliary processor 123 may use less power than the main processor 121, or may be configured to specialize in a given function. The auxiliary processor 123 may be implemented independently of, or as part of, the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another functionally related element (e.g., the camera module 180 or the communication module 190). According to an embodiment, the auxiliary processor 123 (e.g., the neural processing unit) may include a hardware structure specified for processing of an artificial intelligence model. The artificial intelligence model may be created through machine learning. For example, such learning may be performed, by the electronic device 101 itself where the artificial intelligence model is performed or may also be performed via a separate server (e.g., the server 108). Learning algorithms may include, but not limited thereto, for example, supervised learning, unsupervised learning, semi-supervised learning, or reinforcement learning. The artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-networks or a combination of two or more thereof, but is not limited thereto. The artificial intelligence model may, additionally or alternatively, include a software structure, as well as the hardware structure.

The memory 130 may store various data used by at least one element (e.g., the processor 120 or the sensor module 176) of the electronic device 101. The data may include, for example, software (e.g., programs 140) and input data or output data regarding commands related thereto. The memory 130 may include a volatile memory 132 or a non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing back multimedia or records. The receiver may be used for receiving incoming calls. According to an embodiment, the receiver may be implemented separately from, or as part of the speaker.

The display module 160 may visually provide information to the outside (e.g., user) of the electronic device 101. The display module 160 may include, for example, a display, a holographic device, a projector, and a control circuit for controlling the corresponding device. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 101 (e.g., a speaker or a headphone)) coupled directly or wirelessly with the electronic device 102.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor) and supports a direct (e.g., wired) communication or a wireless communication. According to an embodiment, the communication module 190 may include a wireless communication module 192 (e.g., a cellular communication module, a short-range communication module, or a global navigation satellite system (GNSS) communication module) or a wired communication module 194 (e.g., a local area network (LAN) communication module, or a power line communication module). A corresponding one of these communication modules may communicate with the external electronic device 104 via the first network 198 (e.g., a short-range communication network, such as Bluetooth TM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These different types of communication modules may be integrated into a single element (e.g., a single chip), or may be implemented as a plurality of separate elements (e.g., multiple chips). The wireless communication module 192 may identify or authenticate the electronic device 101 within a communication network, such as the first network 198 or the second network 199, by using subscriber information (e.g., an international mobile subscriber identifier (IMSI)) stored in the subscriber identification module 196.

The wireless communication module 192 may support a 5G network, after a 4G network, and next-generation communication technology, e.g., new radio (NR) access technology. The NR access technology may support high-speed transmission of large amounts of data (enhanced mobile broadband (eMBB)), minimization of terminal power consumption and connection of multiple terminals (massive machine type communications (mMTC)), or ultra-reliable and low-latency communications (URLLC). The wireless communication module 192 may support a high-frequency band (e.g., the mmWave band) to achieve, for example, a high data transfer rate. The wireless communication module 192 may support various technologies for securing performance on a high-frequency band, such as, e.g., beamforming, massive multipleinput and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include an antenna including a radiating element including a conductive material or a conductive pattern formed on a substrate (e.g., a PCB). According to an embodiment, the antenna module 197 may include a plurality of antennas (e.g., array antennas). In this case, at least one antenna appropriate for a communication scheme used in the communication network, such as the first network 198 or the second network 199, may be selected, for example, by the communication module 190 from the plurality of antennas. The signal or the power may be transmitted or received between the communication module 190 and the external electronic device via the selected at least one antenna. According to some embodiments, another component (e.g., a radio frequency integrated circuit (RFIC)) other than the radiating element may be additionally formed as part of the antenna module 197. According to an embodiment, the antenna module 197 may form a mmWave antenna module. According to an embodiment, the mmWave antenna module may include a printed circuit board, an RFIC disposed at a first surface (e.g., the lower surface) of the printed circuit board or adjacent thereto and capable of supporting specified high-frequency bands (e.g., mmWave bands), and a plurality of antennas (e.g., an array antenna) disposed at a second surface (e.g., the upper or side surface) of the printed circuit board or adjacent thereto and capable of transmitting or receiving signals in the specified high-frequency bands.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. Upon receiving the request, the one or more external electronic devices may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultralow-latency services by using, for example, distributed computing or mobile edge computing. In another embodiment, the external electronic device 104 may include an Internet-of-things (IoT) device. The server 108 may be an intelligent server using machine learning and/or neural networks. According to an embodiment, the external electronic device 104 or the server 108 may be included in the second network 199. The electronic device 101 may be applied to an intelligent service (e.g., smart home, smart city, smart car, or healthcare) based on 5G communication technology or IoT-related technology.

The electronic device according to various embodiments set forth herein may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. In relation to the description of the drawings, similar reference numerals may be used for similar or related components. The singular form of a noun corresponding to an item may include one item or a plurality of items unless the context clearly indicates otherwise. As used herein, each of such phrases as "A or B," "at least one of A and B," "at least one of A or B," "A, B, or C," at least one of A, B, and C," and "at least one of A, B, or C," may include all possible combinations of the items enumerated together in a corresponding one of the phrases. Such terms as "a first", "a second", "the first", and "the second" may be used to simply distinguish a corresponding element from another, and does not limit the elements in other aspect (e.g., importance or order). When a certain (e.g., a first) component is mentioned as being "coupled" or "connected" to another (e.g., a second) component, with or without a term "functionally" or "communicatively," it means that the certain component may be connected to the other component directly (e.g., wiredly), wirelessly, or via a third component.

As used in connection with various embodiments of the disclosure, the term "module" may include a unit implemented in hardware, software, or firmware, and may interchangeably be used with other terms, for example, "logic," "logic block," "part," or "circuitry". The module may be an integrally configured component or a minimum unit or a portion of the component, which performs one or more functions. For example, according to an embodiment, the module may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more stored instructions from the storage medium, and execute it. This enables the device to be operated to perform at least one function in response to the at least one invoked instruction. The one or more instructions may include codes generated by a compiler or code capable of being executed by an interpreter. The machine-readable storage medium may be provided in the form of a non-transitory storage medium. Here, the term "non-transitory" merely means that the storage medium is a tangible device and does not contain a signal (e.g., electromagnetic waves), and this term is not intended to distinguish a case where data is permanently stored on the storage medium and a case where data is temporarily stored.

According to an embodiment, methods according to various embodiments of the disclosure may be included and provided in a computer program product. The computer program product may be traded as a product between a seller and a purchaser. The computer program product may be distributed in the form of a machine-readable storage medium (e.g., a compact disc read-only memory (CD-ROM)), or may be directly distributed through an application store (e.g., Play Store^{™}) or directly between two user devices (e.g., smartphones), or may be distributed online (e.g., downloaded or uploaded). If distributed online, at least part of the computer program product may be temporarily generated or at least temporarily stored in the machine-readable storage medium, such as memory of the manufacturer's server, a server of the application store, or a relay server.

According to various embodiments, each of the above-described components (e.g., module or program) may include either a single entity or multiple entities, and some of the multiple entities may be placed separately from other components. According to various embodiments, one or more of the components or operations described above may be omitted, or one or more other components or operations may be added. Alternatively, or additionally, multiple components (e.g., modules or programs) may be integrated into a single component. In such a case, the integrated element may perform one or more functions of each of the plurality of elements in the same or similar manner as they are performed by a corresponding one of the plurality of elements before the integration. According to various embodiments, operations performed by a module, a program, or other components may be executed sequentially, in parallel, repetitively, or heuristically, one or more of the operations may be executed in a different order or omitted, or one or more other operations may be added.

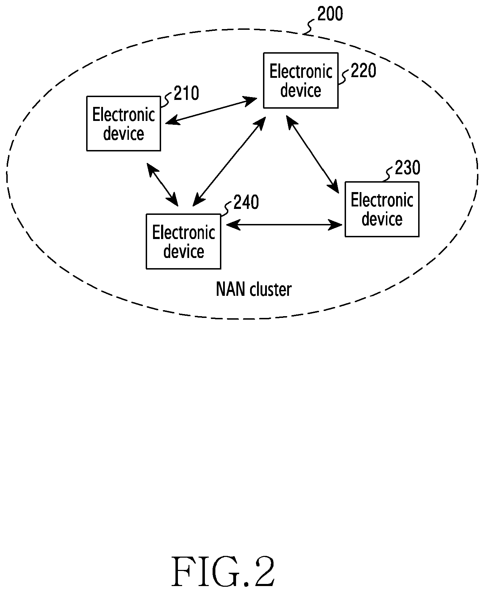

FIG. 2 is a diagram illustrating a neighbor awareness network (NAN) cluster according to an embodiment.

Neighbor awareness networking (NAN) based on Wi-Fi technology may support communication between electronic devices that share common NAN parameters, such as a time period between consecutive discovery windows (DWs), a beacon interval, and an NAN discovery channel(s). The electronic devices that share the common NAN parameters may be referred to as NAN devices. A NAN device may be a device that implements an NAN protocol. A NAN cluster may refer to a collection of NAN devices that share a set of NAN parameters and are synchronized to the same DW schedule. The NAN cluster may be referred to as an NAN cluster according to an NAN specification (or standard) or a Wi-Fi Aware specification (or standard).

Referring to FIG. 2, an NAN cluster 200 according to an embodiment is illustrated. The NAN cluster 200 may include a plurality of electronic devices (e.g., the electronic device 101 of FIG. 1) 210, 220, 230, and 240. Each of the electronic devices 210, 220, 230, and 240 of the NAN cluster 200 may be an NAN device.

In an embodiment, each of the electronic devices 210, 220, 230, and 240 may transmit a beacon (or a discovery beacon or a beacon frame) and receive a beacon (or a discovery beacon or a beacon frame) from other electronic devices 210, 220, 230, and 240, thereby forming the single NAN cluster 200 that operates according to synchronized time clocks, and the electronic devices 210, 220, 230, and 240 in the NAN cluster 200 may perform NAN cluster synchronization. That is, time clocks of the respective electronic devices 210, 220, 230, and 240 in the NAN cluster 200 may be synchronized.

The discovery beacon may refer to a signal transmitted to enable an electronic device not joining the NPN cluster 200 to discover the NPN cluster 200. For example, the discovery beacon may be a signal to indicate presence of the NPN cluster 200, and external electronic devices not joining the NPN cluster 200 may perform a passive scan to receive the discovery beacon. The discovery beacon may include information required for synchronization with the NPN cluster 200. That is, the discovery beacon may include an information element (IE) related to the NPN cluster 200. For example, the discovery beacon may include at least one of a frame control (FC) field indicating a function (e.g., a beacon) of the signal, a broadcast address, a media access control (MAC) address of the transmitting electronic device, a cluster identifier (ID), a sequence control field, a time stamp for a beacon frame, a beacon interval indicating an interval at which the discovery beacon is transmitted, or capability information about the electronic device transmitting the discovery beacon. An external electronic device may discover the NPN cluster 200, based on this information, and may join the NPN cluster 200.

In an embodiment, the electronic device 210 (e.g., the electronic device 101) in the NAN cluster 200 may activate a DW at a scheduled time by the synchronized time clock in the NAN cluster 200, and may transmit a synchronization beacon (or beacon frame) and a service discovery frame (SDF) within the DW. The DW may be divided into time units (TUs) in milliseconds (ms). The DW for transmitting and receiving the synchronization beacon and the SDF may occupy 16 time units (TUs), and may have a cycle (or interval) that repeats every 512 time units (512 TUs). Other electronic devices 220, 230, and 240 located around the electronic device 210 may receive the synchronization beacon and/or the SDF transmitted from the electronic device 210, synchronize to the time clock of the electronic device 210, and obtain NAN parameters of the NAN cluster 200.

The synchronization beacon may be periodically transmitted and received every DW in order to continuously maintain time and channel synchronization of the electronic devices 210, 220, 230, and 240 in the cluster 200. The synchronization beacon may be transmitted by a synchronization device among the electronic devices in the cluster. For example, the synchronization device may include an anchor master device, a master device, or a non-master synchronization device defined in the NAN standard. The synchronization beacon may include information required for the electronic devices in the cluster to synchronize with each other. For example, the synchronization beacon may include at least one of an FC field indicating a function (e.g., a beacon) of the signal, a broadcast address, a MAC address of the transmitting electronic device, a cluster ID, a sequence control field, a time stamp for a beacon frame, a beacon interval indicating an interval between start points of DWs, or capability information about the transmitting electronic device. Further, the synchronization beacon may include at least one information element related to the NPN cluster 200. For example, information related to the NPN cluster 200 may include content for a service provided through the NPN cluster 200.

The SDF may be transmitted and received in a DW as needed in order to provide a service to the discovered electronic devices 210, 220, 230, and 240. The SDF may refer to a signal for exchanging data through the NPN cluster 200. According to an embodiment, the SDF may include various fields. For example, the SDF may include a category or action field or frame, and may include at least one piece of information related to NPN cluster 200.

In an embodiment, the NAN cluster 200 may include various types of NAFs, and the various types of NAFs may include a message for NAN data path (NDP) setup for data communication in duration between DWs or a message for performing NAN ranging in a fine time measurement (FTM) period. In an embodiment, NAN ranging may be a function of measuring a distance between two NAN devices included in an NAN cluster 200.

Each of the electronic devices 210, 220, 230, and 240 in the cluster 200 may operate in an active state only during a DW and operate in a low-power state (e.g., a sleep state) during a remaining period other than the DW, thereby reducing power consumption. For example, a DW is a time period during which an electronic device is in an active (or wake) state and power consumption is high, and the electronic device may maintain a sleep state during a period other than the DW, thereby reducing power consumption. The electronic devices 210, 220, 230, and 240 in the cluster 200 may be simultaneously activated at a start time (e.g., DW start) of a synchronized DW, and may simultaneously switch to a sleep state at an end time (e.g., DW end) of the DW.

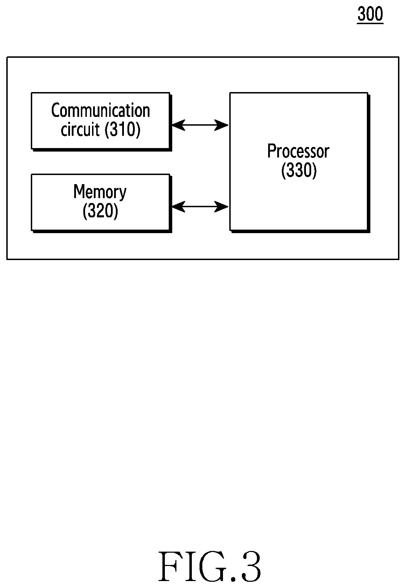

FIG. 3 is a block diagram of an electronic device according to an embodiment.

Referring to FIG. 3, the electronic device 300 (e.g., the electronic device 101 of FIG. 1 or the electronic devices 210, 220, 230, and 240 of FIG. 2) may include a communication circuit 310 (e.g., the wireless communication module 192 of FIG. 1) that transmits and receives a signal to and from an external electronic device via one or more antennas, a memory 320 (e.g., the memory 130 of FIG. 1) that stores instructions for an operation of the electronic device 300, and a processor 330 (e.g., the processor 120 of FIG. 1) that may be configured with one or more single-core processors or one or more multi-core processors.

The communication circuit 310 may include various circuit structures used for modulation and/or demodulation of a signal in the electronic device 300. For example, the communication circuit 310 may modulate a baseband signal into a radio-frequency (RF) signal to output the RF signal through an antenna (not shown), or may demodulate an RF signal received through the antenna into a baseband signal to transmit the baseband signal to the processor 330.

The communication circuit 310 may support at least one of various wired and wireless communication methods. For example, the communication circuit 310 may be in a form of a chipset, or may be a sticker/barcode (e.g., a sticker including an NFC tag) including information necessary for communication. The communication circuit 310 may support, for example, cellular communication, Wireless Fidelity (Wi-Fi), Wi-Fi Direct, Bluetooth, ultra-wideband (UWB), or near-field communication (NFC).

In an embodiment, the communication circuit 310 may transmit or receive audio data to or from another electronic device of an NAN cluster (e.g., the NAN cluster 200 of FIG. 2) through a frequency band (e.g., 2.4 GHz, 5 GHz, and/or 6 GHz) used by electronic devices of the NAN cluster 200.

In an embodiment, the communication circuit 310 may simultaneously support two frequency bands, that is., a dual band. That is, the communication circuit 310 may support a real simultaneous dual band (RSDB) and/or a dual-band dual-concurrent (DBDC) function. Accordingly, the electronic device 300 may be connected to two frequency bands at the same time. For example, the electronic device 300 may be connected to a 2.4 GHz band and a 5 GHz or 6 GHz band at the same time.

Various types of data, such as an application, a program including an instruction, and a file, may be installed and stored in the memory 320. The processor 330 may access the data stored in the memory 320 to use the same, or may store new data in the memory 320. In an embodiment, a program and data for transmitting and receiving audio data may be installed and stored in the memory 320.

The processor 330 may control an overall operation of the electronic device 300. In an embodiment, the processor 330 may control other components included in the electronic device 300 such that the electronic device 300 transmits and receives audio data. For example, the processor 330 may execute a program or an instruction stored in the memory 320, read a file stored in the memory 320, or store a new file in the memory 320.

In an embodiment, the processor 330 performing an operation may be the processor 330 directly performing an operation, and may also include the processor 330 controlling another component, for example, the communication circuit 310, to perform an operation.

In an embodiment, the processor 330 may transmit and receive audio data by executing a program stored in the memory 320. Instructions stored in the memory 200 may, when executed by the processor 330, cause the electronic device 300 to perform at least: discovering a plurality of external electronic devices included in an NAN cluster by performing a neighbor awareness networking (NAN) service discovery in a discovery window (DW), establishing respective NAN data path (NDP) sessions with the plurality of external electronic devices in a first frequency band, scheduling a radio resource to periodically allocate the DW in a second frequency band and to allocate an audio data transmission period for transmitting audio data to the plurality of external electronic devices through the respective NDP sessions in the first frequency band, performing NAN synchronization and the NAN service discovery in the DW, and transmitting the audio data to the plurality of external electronic devices through the respective NDP sessions in the audio data transmission period. The first frequency band may be a 5 GHz band or a 6 GHz band, and the second frequency band may be a 2.4 GHz band.

In an embodiment, the instructions stored in the memory 200 may, when executed by the processor 330, cause the electronic device 300 to perform scheduling the radio resource such that a transmission interval of the audio data is identical in the respective NDP sessions, based on at least one of the number of NDP sessions, the size of the audio data, and the type of the audio data.

In an embodiment, the instructions stored in the memory 200 may, when executed by the processor 330, cause the electronic device 300 to perform scheduling the radio resource such that the audio data transmission period overlaps for at least some of the respective NDP sessions. Further, the electronic device 300 may perform scheduling the radio resource to communicate with an external electronic device not included in the NAN cluster or to provide a service irrelevant to an NAN service by using at least one of the first frequency band and the second frequency band in a period in which no audio data is transmitted and which is not the DW. In addition, the electronic device 300 may perform changing a priority for at least some of the respective NDP sessions in the overlapping period, based on an access category.

In an embodiment, the instructions stored in the memory 200 may, when executed by the processor 330, cause the electronic device 300 to perform scheduling the radio resource to allocate an additional DW in a third frequency band, performing the NAN synchronization and the NAN service discovery in the additional DW by switching the communication circuit from the first frequency band to the third frequency band in a period in which the additional DW is allocated, and transmitting the audio data to the plurality of external electronic devices through the respective NDP sessions in the audio data transmission period by switching the communication circuit from the third frequency band to the first frequency band in a period after the additional DW.

In an embodiment, the scheduling may be performed in units of a slot, the slot may include a plurality of subslots, and the instructions stored in the memory 200 may, when executed by the processor 330, cause the electronic device 300 to perform allocating an idle subslot in which audio data for a first external electronic device is not transmitted to a second external electronic device by performing scheduling in units of a subslot when a period in which transmission of the audio data is not scheduled occurs in a slot allocated to the first external electronic device.

In an embodiment, the instructions stored in the memory 200 may, when executed by the processor 330, cause the electronic device 300 to perform retransmitting the audio data in the idle subslot by performing scheduling in units of the subslot when the transmission of the audio data fails in the slot allocated to the first external electronic device.

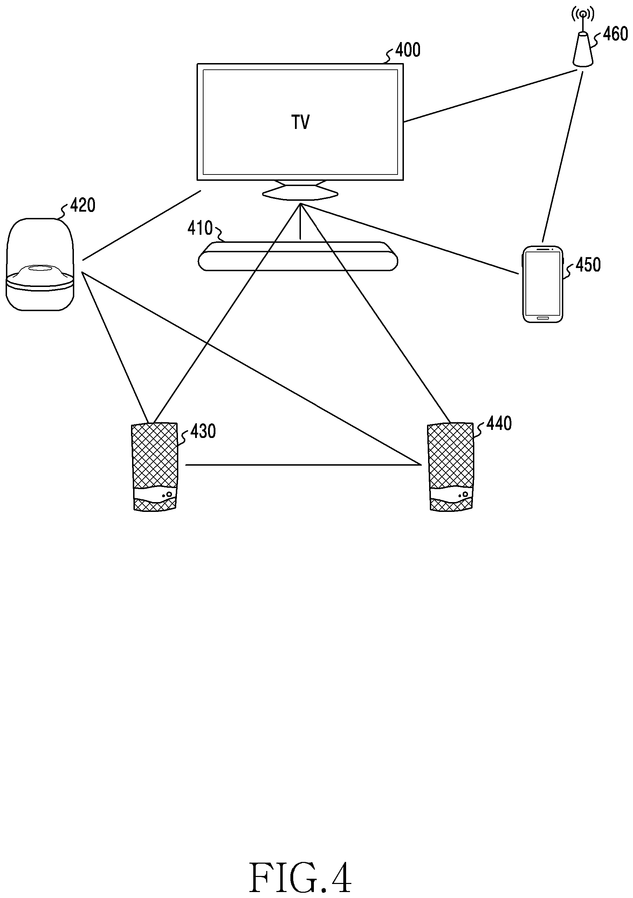

FIG. 4 illustrates a network topology of an NAN cluster according to an embodiment.

Referring to FIG. 4, a TV 400, a soundbar 410, portable speaker #1 420, speaker #2 430, and speaker #3 440 form an NAN cluster. Each device may form the NAN cluster according to a Wi-Fi Aware specification (or standard). The TV 400 and a smartphone 450 are performing direct device-to-device communication. In this case, the TV 400 and the smartphone 450 may perform direct device-to-device communication according to a Wi-Fi Direct specification (or standard). In addition, the TV 400 and the smartphone 450 are each connected to an access point (AP) 460. The TV 400 and the smartphone 450 may communicate with the AP 460 according to the Wi-Fi specification (or standard).

In FIG. 4, the portable speaker 420 with mobility and the smartphone 450 may join the NAN cluster at any time, or may leave the NAN cluster at any time. Accordingly, the network topology may change rapidly, and synchronization between devices may frequently occur.

The TV 400, the soundbar 410, portable speaker #1 420, speaker #2 430, and speaker #3 440 form the NAN cluster, and may thus support group play of audio data. When the number of devices connected to the TV 400, which is an electronic device having an audio source, increases, synchronization mismatches or desynchronization occurs more frequently. For example, as the number of devices connected to the TV 400 increases, wireless channel congestion rises, leading to a higher probability of latency and jitter. Further, a growing amount of audio data to be transmitted by the TV 400, which is the electronic device having the audio source, increases the probability of delays.

A method and a device for transmitting audio data according to an embodiment may transmit audio data robust to a network topology change while performing fast synchronization. In addition, the method and the device may provide adaptive synchronization that reflects a user position and spatial characteristics and a high-quality sound source.

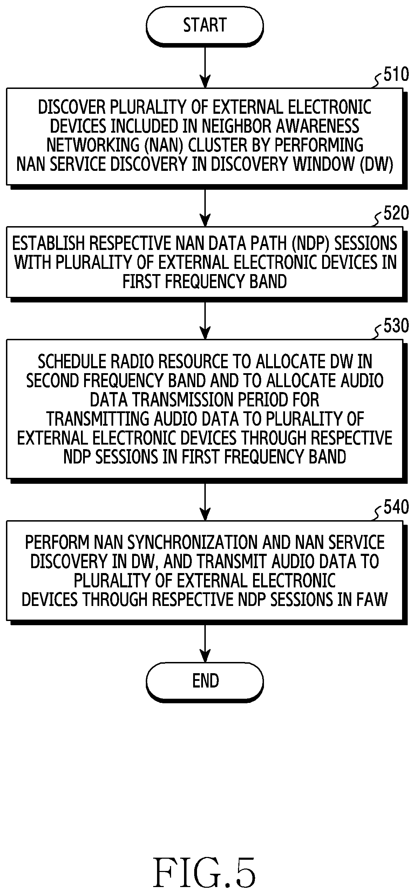

FIG. 5 is a flowchart illustrating an audio data transmission method according to an embodiment.

FIG. 5 illustrates a method in which an electronic device (300 of FIG. 3 or 400 of FIG. 4) included in an NAN cluster 200 transmits audio data to an external electronic device (410, 420, 430, or 440 of FIG. 4) included in the NAN cluster 200.

The electronic device 300 is an NAN device that has already joined the NAN cluster 200. Specifically, the electronic device 300 may perform a passive scan to receive a discovery beacon broadcast through a DW. The discovery beacon may include information necessary for synchronization with the NPN cluster 200. The electronic device 300 having received the discovery beacon may discover the NPN cluster 200, based on the information included in the discovery beacon, and may join the NPN cluster 200.

In operation 510, the electronic device 300 may perform a neighbor awareness networking (NAN) service discovery in the discovery window (DW) to discover a plurality of external electronic devices included in the NAN cluster.

In an embodiment, the electronic device 300 may activate the DW at a scheduled time by a synchronized time clock in the NAN cluster 200, and may transmit a synchronization beacon (or beacon frame) and a service discovery frame (SDF) within the DW.

In an embodiment, the synchronization beacon may be periodically transmitted and received every DW in order to continuously maintain time and channel synchronization of the electronic devices 210, 220, 230, and 240 in the cluster 200. The synchronization beacon may include information required for the electronic devices in the cluster to synchronize with each other. For example, the synchronization beacon may include at least one of an FC field indicating a function (e.g., a beacon) of the signal, a broadcast address, a MAC address of the transmitting electronic device, a cluster ID, a sequence control field, a time stamp for a beacon frame, a beacon interval indicating an interval between start points of DWs, or capability information about the transmitting electronic device. Further, the synchronization beacon may include at least one information element related to the NPN cluster 200. For example, information related to the NPN cluster 200 may include content for a service provided through the NPN cluster 200.

In an embodiment, the SDF may be transmitted and received in a DW as needed in order to provide a service to the discovered electronic devices 210, 220, 230, and 240. The SDF may refer to a signal for exchanging data through the NPN cluster 200. According to an embodiment, the SDF may include various fields. For example, the SDF may include a category or action field or frame, and may include at least one piece of information related to NPN cluster 200.

In an embodiment, the electronic device 300 may perform an unsynchronized service discovery (USD). In this case, the electronic device 300 may operate as a publisher, may transmit at least one unsolicited NAN SDF publish message, and may receive an NAN SDF subscribe message from an external electronic device operating as a subscriber. Subsequently, the electronic device 300 may receive a follow-up message from the external electronic device, thus discovering the external electronic device. In an embodiment, before receiving the follow-up message, the electronic device 300 may transmit a solicited NAN SDF publish message to the external electronic device.

In an embodiment, the electronic device 300 may perform a discovery through NAN instant communication. The electronic device 300 may enter an instant communication mode using an out-of-band (OOB) method triggered, for example, by NFC, BLE, and/or a user action, and may quickly perform a service discovery.

In operation 520, the electronic device 300 may establish respective NAN data path (NDP) session with the plurality of external electronic devices in a first frequency band. In an embodiment, the electronic device 300 may transmit a data path request message to the external electronic devices discovered in operation 510, and receive a data path response message from the external electronic devices receiving the data path request message, thereby establishing the NDP sessions between the electronic device 300 and the external electronic devices. The electronic device 300 may perform the foregoing process for each of the plurality of external electronic devices, thereby establishing the respective NDP sessions with the plurality of external electronic devices.

In an embodiment, the electronic device 300 may establish the NDP sessions in the first frequency band. The first frequency band may include a 2.4 GHz band. The electronic device 300 may transmit and receive the data path request message and the data path response message through the first frequency band in order to establish the NDP session in the first frequency band.

In operation 530, the electronic device 300 may schedule a radio resource to allocate the DW in a second frequency band and to allocate an audio data transmission period for transmitting audio data to the plurality of external electronic devices through the respective NDP sessions in the first frequency band. In an embodiment, the first frequency band may include the 2.4 GHz band, and the second frequency band may include a 5 GHz band or a 6 GHz band.

In an embodiment, the electronic device 300 may perform scheduling in units of one slot which includes 16 time units (TUs). A slot may include an NAN slot. The electronic device 300 may perform scheduling on a cycle that repeats every 512 TUs, that is, 32 slots. One time unit may be 1.024ms. The electronic device 300 may allocate radio resources to the plurality of external electronic devices using a round-robin method. In this case, the electronic device 300 may allocate a radio resource of a preconfigured length to each NDP session to support group play of the plurality of external electronic devices. For example, the electronic device 300 may perform scheduling for each NDP session at an interval of 128 TUs.

In an embodiment, the electronic device 300 may schedule radio resources such that an audio data transmission interval is identical in each NDP session, based on at least one of the number of the NDP sessions, the size of audio data, and the type of audio data. In addition, the electronic device 300 may schedule radio resources such that audio data transmission periods overlap for at least some of the respective NDP sessions. Furthermore, in the overlapping periods, the electronic device 300 may change a priority for at least some of the respective NDP sessions, based on an access category. In an embodiment, the electronic device 300 may schedule radio resources to communicate with an external electronic device not included in the NAN cluster or to provide a service irrelevant to an NAN service by using at least one of the first frequency band and the second frequency band in a period in which no audio data is transmitted and which is not the DW.

In an embodiment, the electronic device 300 may schedule radio resources to allocate an additional DW in a third frequency band, may switch a communication circuit from the first frequency band to the third frequency band in a period in which the additional DW is allocated to perform NAN synchronization and an NAN service discovery in the additional DW, and may switch the communication circuit from the third frequency band to the first frequency band in a period after the additional DW to transmit audio data to the plurality of external electronic devices through the respective NDP sessions in the audio data transmission period. The third frequency band may include a 5 GHz band.

In an embodiment, the electronic device 300 may measure a wireless channel quality and/or a distance with respect to the external electronic devices, and may perform scheduling, based on a measurement result. In an embodiment, the electronic device 300 may measure a wireless channel quality with respect to the external electronic devices by transmitting and receiving a synchronization beacon to and from the external electronic devices in the DW. The wireless channel quality may be used to determine a transmission period and a priority when performing scheduling for a plurality of NDP sessions. In addition, the electronic device 300 may perform a fine time measurement (FTM) procedure, thereby performing FTM ranging for measuring a distance to the external electronic devices. A distance measurement result may be used for audio synchronization between the plurality of external electronic devices. For example, the distance measurement result may be used for playback time synchronization according to the location of an external electronic device, such as a speaker, or used for listening synchronization for an audience which considers a relative location between a user and the external electronic device.

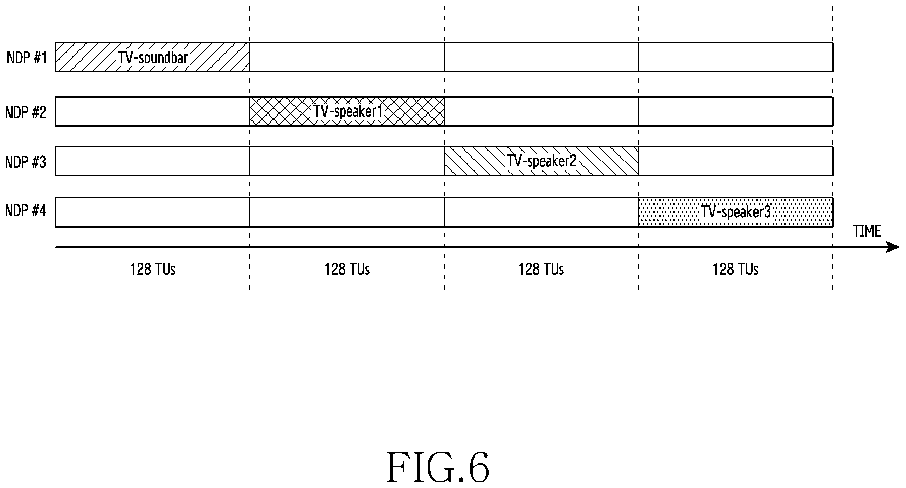

A more detailed description is made with reference to FIG. 6 to FIG. 11.

FIG. 6 is a diagram illustrating a scheduling method according to an embodiment.

Referring to FIG. 6, a TV 400, which is an electronic device having an audio source, establishes respective NDP sessions (NDP #1, NDP #2, NDP #3, and NDP #4) with a soundbar 410, portable speaker #1 420, speaker #2 430, and speaker #3 440. The TV 400, which is the electronic device having the audio source, may perform scheduling using a round-robin method on a repeating cycle of 512 TUs, and may sequentially allocate radio resources to NDP #1, NDP #2, NDP #3, and NDP #4 for 128 TUs.

In an embodiment, the respective NDP sessions (NDP #1, NDP #2, NDP #3, and NDP #4) may be established in a single frequency band, for example, 2.4 GHz, 5 GHz, or 6 GHz.

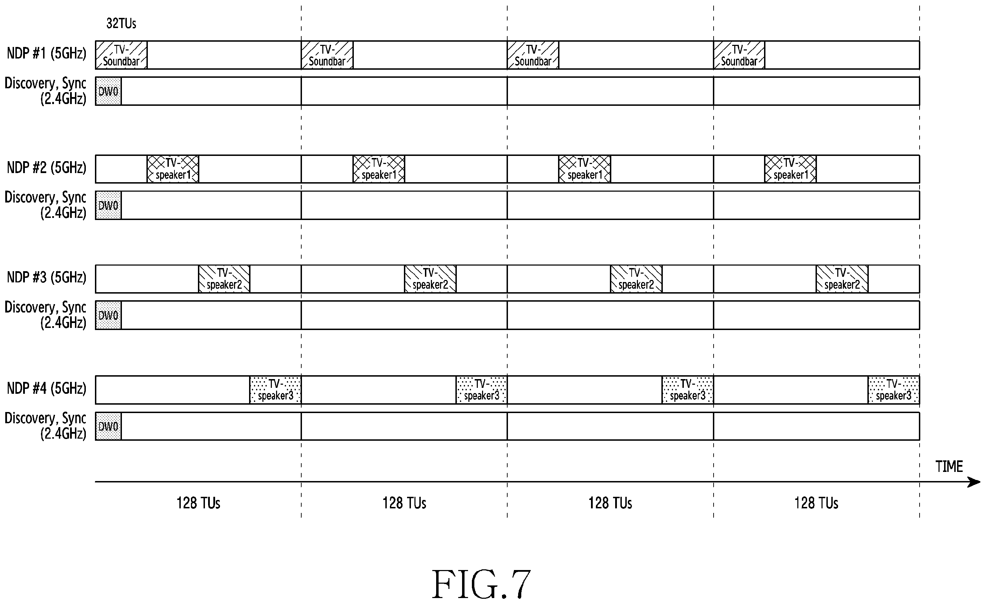

In FIG. 7 to FIG. 11, the TV 400, which is the electronic device having the audio source, may simultaneously support two frequency bands, that is, a dual band. That is, the TV 400 may support a real simultaneous dual band (RSDB) and/or a dual band dual concurrent (DBDC) function. Accordingly, the TV 400 may be connected to two frequency bands at the same time. For example, the TV 400 may be connected to a 2.4 GHz band and a 5 GHz or 6 GHz band at the same time. In addition, the TV 400 may perform scheduling on a repeating cycle of 512 TUs, that is, 32 slots.

FIG. 7 is a diagram illustrating a scheduling method according to an embodiment.

Referring to FIG. 7, a TV 400, which is an electronic device having an audio source, establishes respective NDP sessions (NDP #1, NDP #2, NDP #3, and NDP #4) with a soundbar 410, portable speaker #1 420, speaker #2 430, and speaker #3 440 in a 5 GHz band.

The TV 400 may schedule radio resources to allocate DW0 in a first slot of 32 slots in a 2.4 GHz band and to allocate an audio data transmission period for transmitting audio data through each NDP session (NDP #1, NDP #2, NDP #3, and NDP #4) in the 5 GHz band. Here, the TV 400 may allocate 128 TUs, specifically, 32 TUs equally within 8 slots, that is, 2 slots, to each NDP session (NDP #1, NDP #2, NDP #3, and NDP #4). According to an embodiment, radio resources may be scheduled a plurality of times for each NDP session (NDP #1, NDP #2, NDP #3, and NDP #4) for a short time (32 TUs), thereby achieving low latency and low jitter during audio data transmission.

In an embodiment, the TV 400 may perform scheduling radio resources such that an audio data transmission interval is identical in each NDP session, based on at least one of the number of NDP sessions, the size of audio data, and the type of audio data.

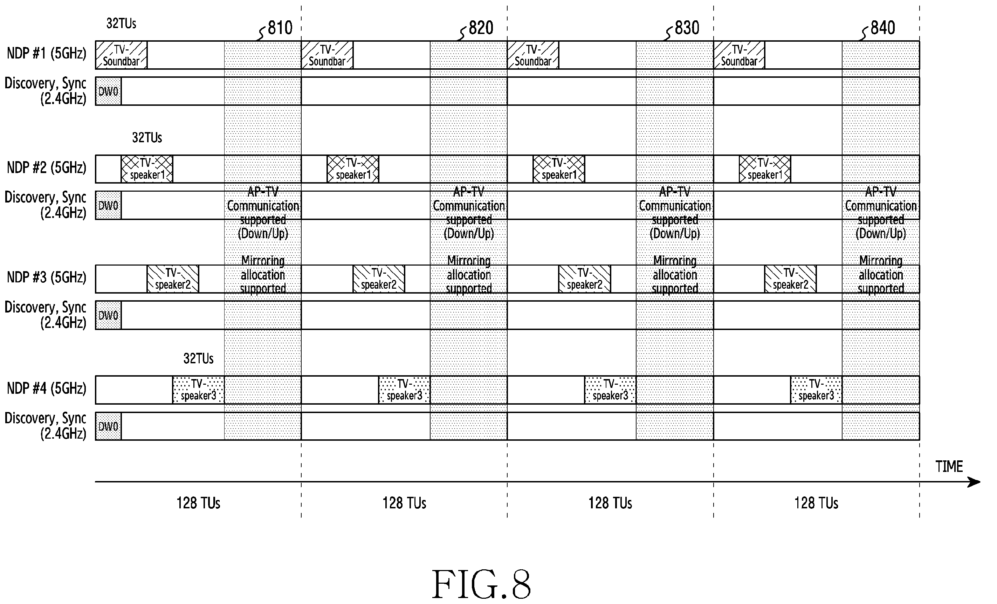

FIG. 8 is a diagram illustrating a scheduling method according to an embodiment.

Referring to FIG. 8, a TV 400, which is an electronic device having an audio source, establishes respective NDP sessions (NDP #1, NDP #2, NDP #3, and NDP #4) with a soundbar 410, portable speaker #1 420, speaker #2 430, and speaker #3 440 in a 5 GHz band.

The TV 400 may schedule radio resources to allocate DW0 in a first slot of 32 slots in a 2.4 GHz band and to allocate an audio data transmission period for transmitting audio data through each NDP session (NDP #1, NDP #2, NDP #3, and NDP #4) in the 5 GHz band. Here, the TV 400 may allocate 128 TUs, specifically, 32 TUs equally within 8 slots, that is, 2 slots, to each NDP session (NDP #1, NDP #2, NDP #3, and NDP #4).

In an embodiment, the TV 400 may schedule the radio resources such that the TUs allocated to the respective NDP sessions (NDP #1, NDP #2, NDP #3, and NDP #4) overlap. In this case, a period 810, 820, 830, or 840 in which no audio data is transmitted and which is not a DW may occur. The TV 400 may schedule the radio resources to communicate with an external electronic device not included in an NAN cluster or to provide a service unrelated to an NAN service by using at least one of the 2.4 GHz band and the 5 GHz band during the period in which no audio data is transmitted and which is not the DW. Here, when communicating with an external electronic device or providing a service unrelated to an NAN service by using a frequency band, for example, a 6 GHz band, other than the 5 GHz band in which the NDP session (NDP #1, NDP #2, NDP #3, and NDP #4) is established, overhead due to channel switching may occur. However, according to an embodiment of the disclosure, despite the overhead due to channel switching, the limited radio resources may be efficiently utilized.

Further, in an embodiment, the TV 400 may perform changing a priority for at least some of the respective NDP sessions in an overlapping period, based on an access category. That is, the access category may be changed for certain NDP sessions, thereby performing scheduling such that audio data may be prioritized for transmission in a higher-priority NDP session among overlapping NDP sessions. changing an access category will be described below in detail.

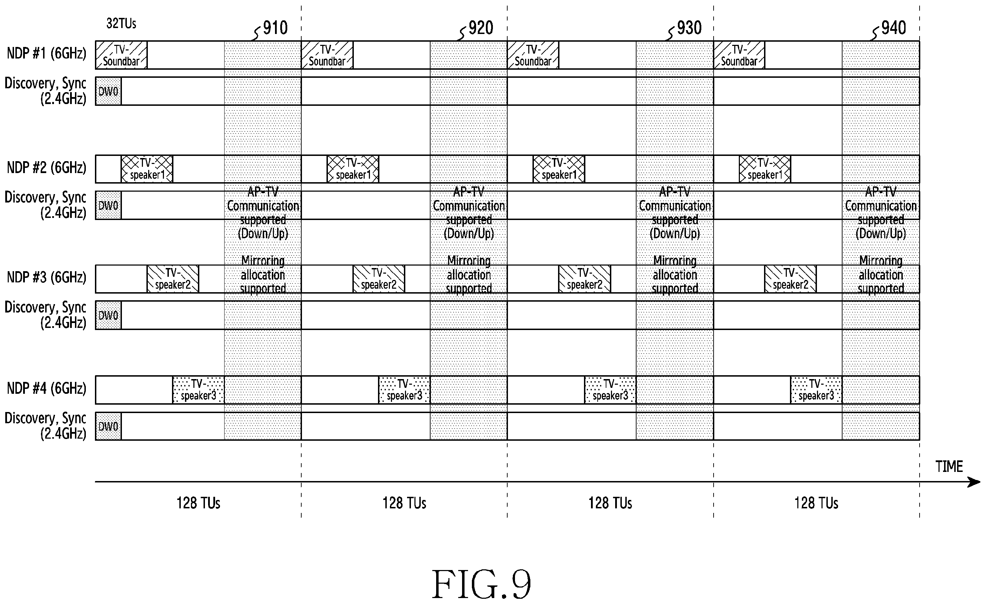

FIG. 9 is a diagram illustrating a scheduling method according to an embodiment.

Referring to FIG. 9, a TV 400, which is an electronic device having an audio source, establishes respective NDP sessions (NDP #1, NDP #2, NDP #3, and NDP #4) with a soundbar 410, portable speaker #1 420, speaker #2 430, and speaker #3 440 in a 5 GHz band.

The TV 400 may schedule radio resources to allocate DW0 in a first slot of 32 slots in a 2.4 GHz band and to allocate an audio data transmission period for transmitting audio data through each NDP session (NDP #1, NDP #2, NDP #3, and NDP #4) in the 6 GHz band. Here, the TV 400 may allocate 128 TUs, specifically, 32 TUs equally within 8 slots, that is, 2 slots, to each NDP session (NDP #1, NDP #2, NDP #3, and NDP #4).

In an embodiment, the TV 400 may schedule the radio resources such that the TUs allocated to the respective NDP sessions (NDP #1, NDP #2, NDP #3, and NDP #4) overlap. In this case, a period 810, 820, 830, or 840 in which no audio data is transmitted and which is not a DW may occur. The TV 400 may schedule the radio resources to communicate with an external electronic device not included in an NAN cluster or to provide a service unrelated to an NAN service by using at least one of the 2.4 GHz band and the 5 GHz band during the period in which no audio data is transmitted and which is not the DW. Here, when communicating with an external electronic device or providing a service unrelated to an NAN service by using a frequency band, for example, a 5 GHz band, other than the 6 GHz band in which the NDP session (NDP #1, NDP #2, NDP #3, and NDP #4) is established, overhead due to channel switching may occur. However, according to an embodiment of the disclosure, despite the overhead due to channel switching, the limited radio resources may be efficiently utilized.

Further, in an embodiment, the TV 400 may perform changing a priority for at least some of the respective NDP sessions in an overlapping period, based on an access category. That is, the access category may be changed for certain NDP sessions, thereby performing scheduling such that audio data may be prioritized for transmission in a higher-priority NDP session among overlapping NDP sessions. Changing an access category will be described below in detail.

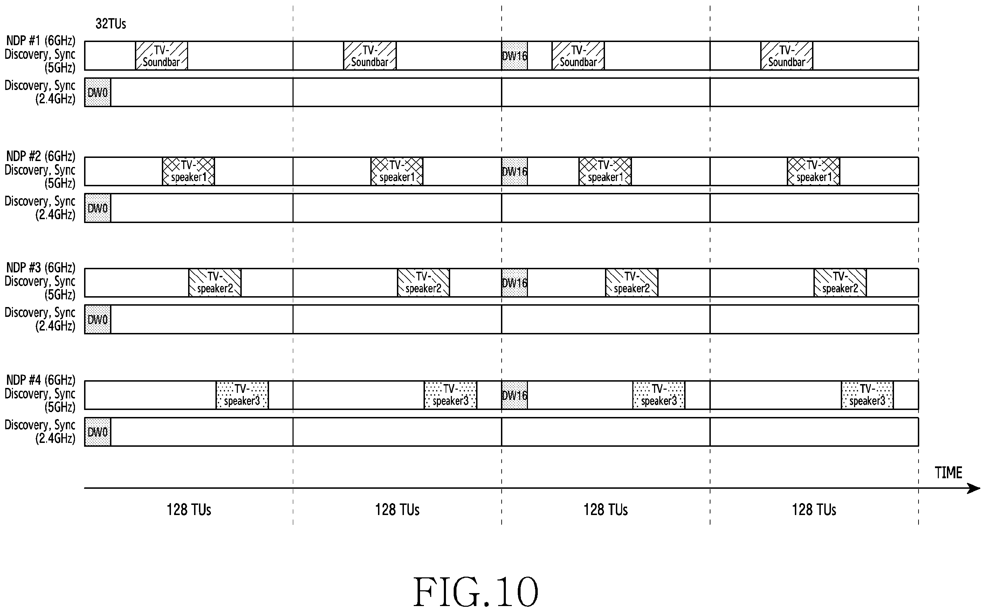

FIG. 10 is a diagram illustrating a scheduling method according to an embodiment.

Referring to FIG. 10, a TV 400, which is an electronic device having an audio source, establishes respective NDP sessions (NDP #1, NDP #2, NDP #3, and NDP #4) with a soundbar 410, portable speaker #1 420, speaker #2 430, and speaker #3 440 in a 5 GHz band.

The TV 400 may schedule radio resources to allocate DW0 in a first slot of 32 slots in a 2.4 GHz band and to allocate an audio data transmission period for transmitting audio data through each NDP session (NDP #1, NDP #2, NDP #3, and NDP #4) in a 6 GHz band. Here, the TV 400 may allocate 128 TUs, specifically, 32 TUs equally within 8 slots, that is, 2 slots, to each NDP session (NDP #1, NDP #2, NDP #3, and NDP #4).

In an embodiment, the TV 400 may schedule the radio resources such that the TUs allocated to the respective NDP sessions (NDP #1, NDP #2, NDP #3, and NDP #4) overlap. Further, the TV 400 may additionally allocate DW16 in a seventeenth slot among the 32 slots in the 5 GHz band. The audio data transmission period for each NDP session (NDP #1, NDP #2, NDP #3, and NDP #4) may be allocated not to overlap with DW0 and DW16. The TV 400 may switch a communication circuit from the 6 GHz band to the 5 GHz band to perform NAN synchronization and NAN service discovery in a DW16-allocated period, and may switch the communication circuit from the 5 GHz band back to the 6 GHz band to transmit audio data after DW16.

According to an embodiment, the DWs for performing NAN synchronization may be allocated to two slots, thereby providing more accurate time synchronization.

Further, in an embodiment, the TV 400 may perform changing a priority for at least some of the respective NDP sessions in an overlapping period, based on an access category. That is, the access category may be changed for certain NDP sessions, thereby performing scheduling such that audio data may be prioritized for transmission in a higher-priority NDP session among overlapping NDP sessions. Changing an access category will be described below in detail.

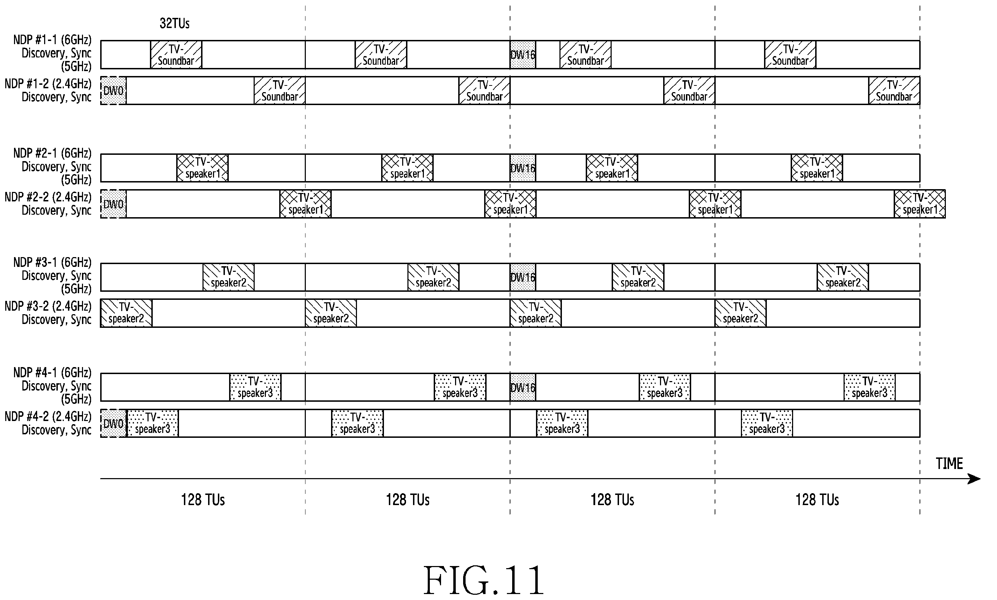

FIG. 11 is a diagram illustrating a scheduling method according to an embodiment.

Referring to FIG. 11, a TV 400, which is an electronic device having an audio source, establishes respective NDP sessions (NDP #1-1, NDP #2-1, NDP #3-1, and NDP #4-1) with a soundbar 410, portable speaker #1 420, speaker #2 430, and speaker #3 440 in a 6 GHz band. Further, the TV 400 may further establish respective NDP sessions (NDP #1-2, NDP #2-2, NDP #3-2, and NDP #4-2) with the soundbar 410, portable speaker #1 420, speaker #2 430, and speaker #3 440 in a 2.4 GHz band.

The TV 400 may schedule radio resources to allocate an audio data transmission period for transmitting audio data through each NDP session (NDP #1-2, NDP #2-2, NDP #3-2, and NDP #4-2) in the 2.4 GHz band, to allocate DW16 in a seventeenth slot of 32 slots in a 5 GHz band, and to allocate an audio data transmission period for transmitting audio data through each NDP session (NDP #1-1, NDP #2-1, NDP #3-1, and NDP #4-1) in the 6 GHz band. Here, the TV 400 may allocate 128 TUs, specifically, 32 TUs equally within 8 slots, that is, 2 slots, to each NDP session (NDP #1, NDP #2, NDP #3, and NDP #4).

In an embodiment, the TV 400 may schedule the radio resources such that the TUs allocated to the respective NDP sessions (NDP #1, NDP #2, NDP #3, NDP #4) overlap. Further, the TV 400 may additionally allocate DW0 in a first slot among the 32 slots in the 2.4 GHz band. The TV 400 may switch a communication circuit from the 6 GHz band to the 5 GHz band to perform NAN synchronization and NAN service discovery in a DW16-allocated period, and may switch the communication circuit from the 5 GHz band back to the 6 GHz band to transmit audio data after DW16.

According to an embodiment, the NDP sessions may be established in the two frequency bands, thereby providing a high data rate, and the DWs for performing NAN synchronization may be selectively allocated to the two slots, thereby increasing scheduling flexibility and providing more accurate time synchronization.

Referring back to FIG. 5,

in operation 540, the electronic device 300 may perform NAN synchronization and an NAN service discovery in the DW, and may transmit audio data to the plurality of external electronic devices through each NDP session in the audio data transmission period.

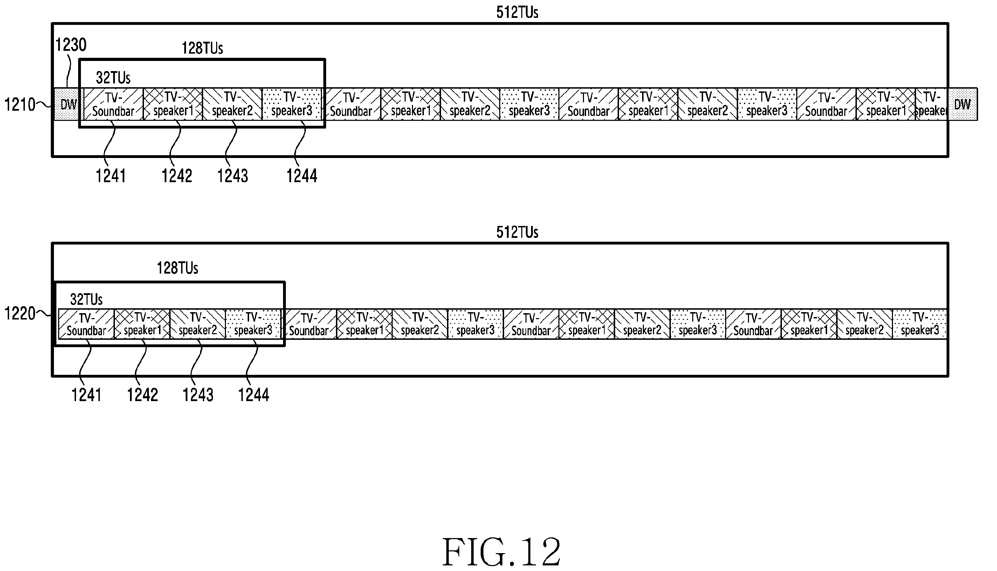

FIG. 12 to FIG. 14 are diagrams illustrating subslot scheduling according to an embodiment.

An electronic device 300 may perform scheduling in units of one slot including 16 time units (TUs). However, when scheduling is performed in units of one slot, that is, 16 TUs, more time than required may be allocated to an external electronic device. In an embodiment, the electronic device 300 may perform scheduling in units of subslots instead of slots, thereby performing efficient scheduling. A subslot may include 1 TU, 2 TUs, 4 TUs, or 8 TUs.

In an embodiment, the electronic device 300 may obtain information related to a data rate required by a codec (e.g., pulse code modulation (PCM), Dolby Digital, or Dolby Digital Plus) used for audio signal processing in a higher layer. In addition, the electronic device 300 may measure a quality of a wireless channel with the external electronic device. More specifically, the electronic device 300 may measure the quality of the wireless channel with the external electronic device by transmitting and receiving a synchronization beacon to and from the external electronic device in a DW. The electronic device may determine a modulation and coding scheme (MCS) level to be used for audio data transmission, based on information about the quality of the wireless channel, and may estimate a throughput of a physical channel, based on the MCS level. The electronic device 300 may allocate a slot or a subslot to the external electronic device, based on the estimated throughput and the data rate required by the codec. According to an embodiment, efficient scheduling may be performed.

Referring to FIG. 12, the electronic device 300 may perform scheduling on a repeating cycle of 512 TUs 1210 and 1220, that is, 32 slots. A TV 400, which is an electronic device having an audio source, establishes respective NDP sessions 1231, 1232, 1233, and 1234 with a soundbar 410, portable speaker #1 420, speaker #2 430, and speaker #3 440. Each NDP session 1231, 1232, 1233, and 1234 may be equally allocated 32 TUs, that is, 2 slots.

Here, a DW 1230 may be included in the 512 TUs 1210, or as illustrated in FIG. 7, a DW may be allocated in a different band and all 512 TUs may be allocated to the respective NDP sessions 1231, 1232, 1233, and 1234 (1220).

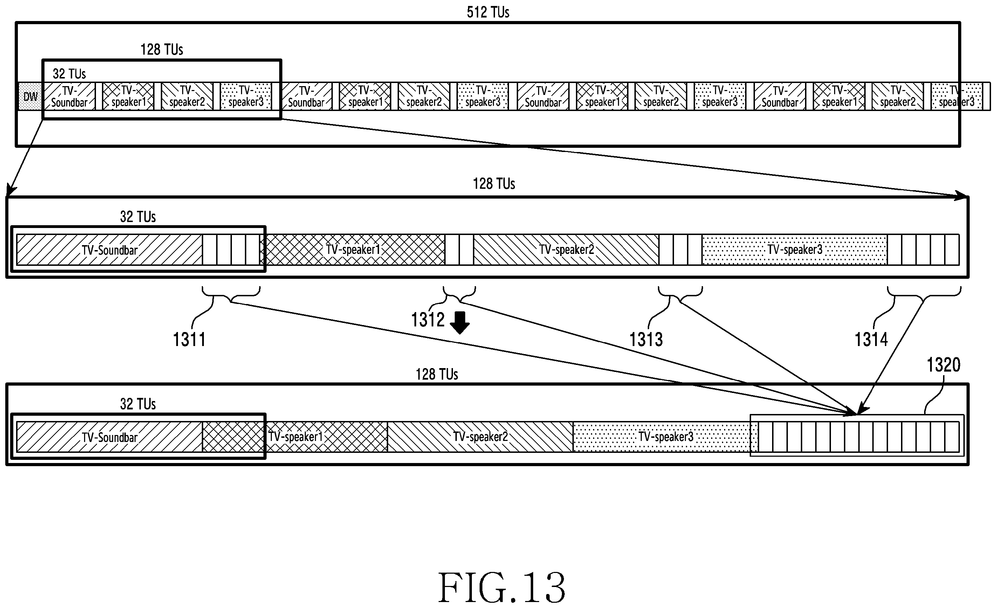

Referring to FIG. 13, idle periods 1311, 1312, 1313, and 1314 not used for audio data transmission may occur in two slots allocated to each NDP session. According to an embodiment, scheduling may be performed in units of subslots for the idle periods not used for audio data transmission, thereby efficiently utilizing radio resources.

In an embodiment, the electronic device 300 may predict occurrence of an idle period, based on the estimated throughput and the data rate required by the codec. In this case, the electronic device 300 may perform scheduling in units of subslots such that an idle period does not occur in the middle of 512 TUs. More specifically, the electronic device 300 may consecutively configure radio resources allocated to the respective NDP sessions 1231, 1232, 1233, and 1234. In this case, an idle period 1320 may occur in an end portion of the 512 TUs. The electronic device 300 may use the idle period 1320 for additional data transmission.

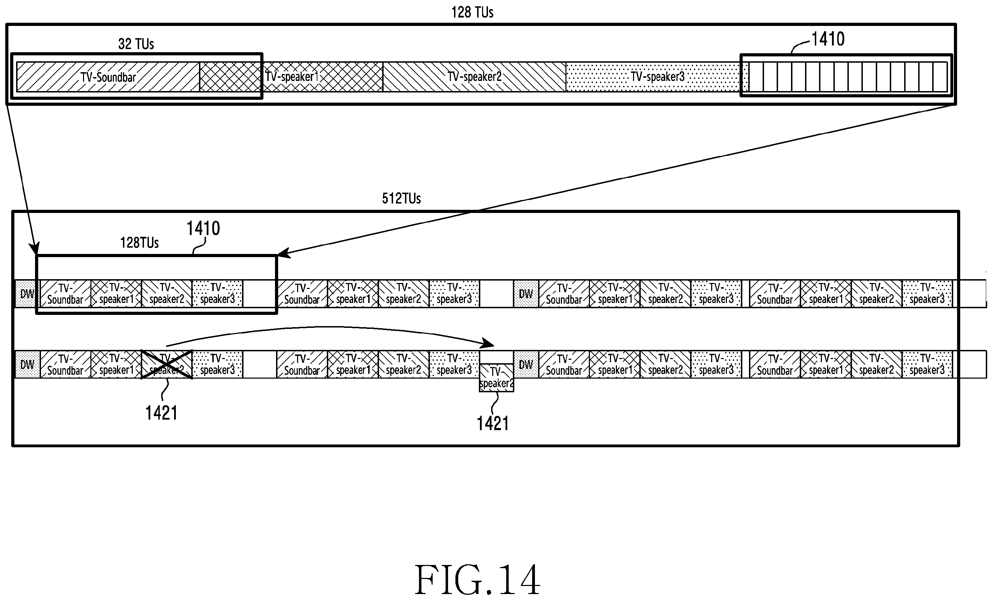

Referring to FIG. 14, the electronic device 300 may perform scheduling in units of subslots such that an idle period 1410 is located in an end portion of 512 TUs. In an embodiment, the idle period 1410 may be referred to as an idle subslot. When transmitting audio data, the electronic device 300 may fail to transmit the audio data through an NDP session with speaker #2 430 in a period 1421 due to a predetermined cause, for example, a failure to compete with another WLAN. In an embodiment, the electronic device 300 may schedule the audio data to be retransmitted using the idle period 1421.

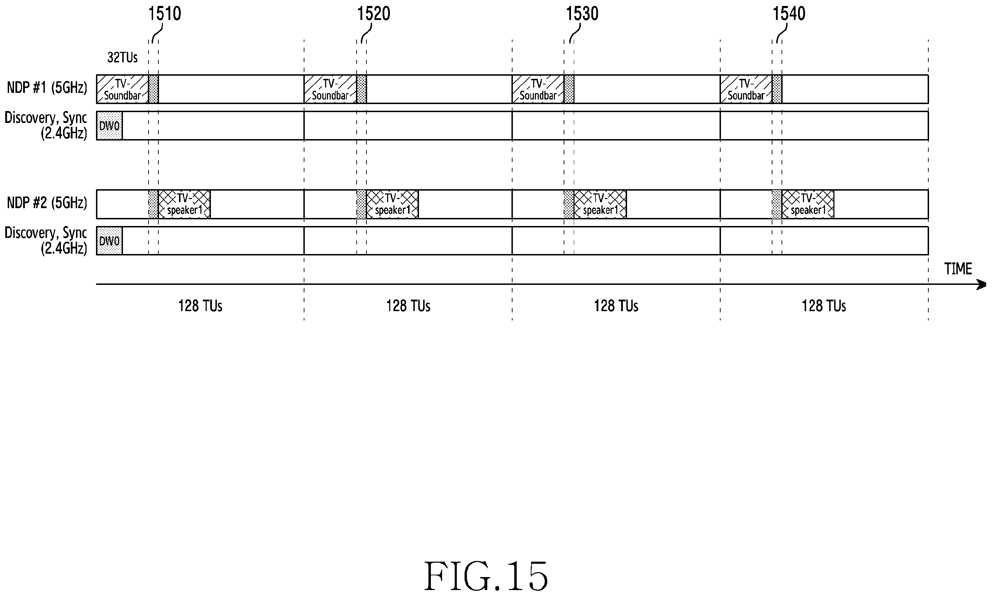

FIG. 15 is a diagram illustrating changing a priority when radio resources allocated to different NDP sessions overlap according to an embodiment.

An electronic device 300 may perform scheduling radio resources such that periods for transmitting audio data overlaps (1510, 1520, 1530, 1540) in at least some of respective NDP sessions. In the overlapping periods 1510, 1520, 1530, and 1540, audio data may be transmitted for only one NDP session. In an embodiment, the electronic device 300 may perform changing a priority, based on an access category, for at least some of the respective NDP sessions in the overlapping period 1510, 1520, 1530, or 1540.

Referring to FIG. 15, a TV 400, which is an electronic device having an audio source, establishes respective NDP sessions (NDP #1 and NDP #2) with a soundbar 410 and portable speaker #1 420. The TV 400 may schedule radio resources to allocate DW0 in a first slot of 32 slots in a 2.4 GHz band and to allocate an audio data transmission period for transmitting audio data through each NDP session (NDP #1 and NDP #2) in a 5 GHz band. Here, the TV 400 may allocate 128 TUs, specifically, 32 TUs equally within 8 slots, that is, 2 slots, to each NDP session (NDP #1, NDP #2, NDP #3, and NDP #4). In an embodiment, the TV 400 may schedule the radio resources such that the TUs allocated to the NDP sessions (NDP #1, NDP #2, NDP #3, and NDP #4) overlap.

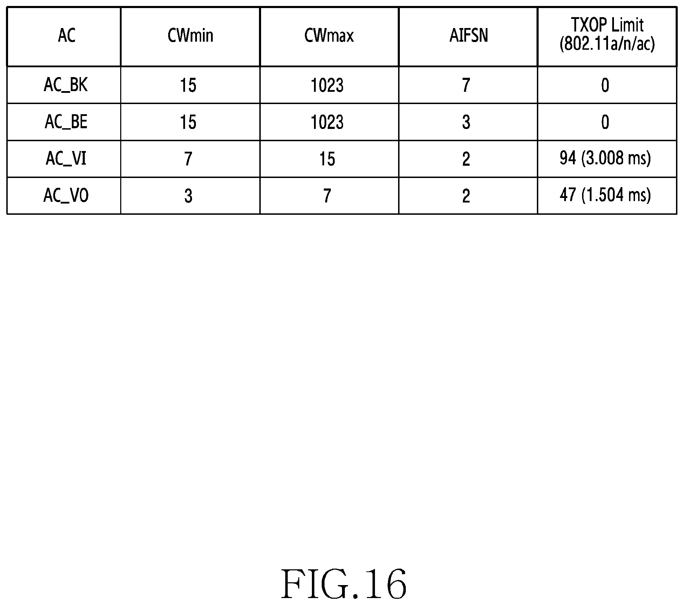

The TV 400 may perform changing a priority, based on an access category, for at least some of the respective NDP sessions (NDP #1 and NDP #2) in the overlapping periods 1510, 1520, 1530, and 1540. A description will be made with reference to FIG. 16.

FIG. 16 is a diagram illustrating an access category according to an embodiment.

Referring to FIG. 16, access categories may be classified into AC_BK (background), AC_BE (best effort), AC_VI (video), and AC_VO (voice), and parameter values of CWmin, CWmax, AIFSN, and TXOP limit are configured for each access category. The access category classification and parameter values are merely examples and are not intended to be restrictive, but may be variously configured. AC_VO (voice) has a highest priority, and the priority decreases toward AC_BK (background). An access category having a relatively high priority may be processed before an access category having a relatively low priority. The electronic device 300 may allocate an access category for each NDP session, thereby determining a transmission priority in the overlapping periods 1510, 1520, 1530, and 1540. In an embodiment, an access category may be arbitrarily allocated, regardless of services actually provided by the NDP sessions, in order to prioritize the NDP sessions.

In FIG. 15, when the soundbar 410 is used as a main audio output device, the TV 400 may allocate an access category of the NDP session (NDP #1) with the soundbar 410 to AC_VO having a high priority, and may allocate an access category of the NDP session (NDP #2) with portable speaker #1 420 to AC_BE. In this case, the radio resources may be scheduled for the NDP session (NDP #1) having the high priority in the overlapping periods 1510, 1520, 1530, and 1540.

Although an embodiment illustrates the TV as an electronic device and the soundbar 410, portable speaker #1 420, speaker #2 430, and speaker #3 440 as an external electronic device, the electronic device and the external electronic device are not limited to these examples and may include various types of electronic devices. In an embodiment, the electronic device may include various electronic devices (e.g., a smartphone, an MP3 player, and an audio player) having an audio source, and the external electronic device may include various electronic devices (e.g., a speaker, a Bluetooth speaker, an earphone, an earbud, and a headphone) that receive an audio source from the electronic device and play the same. The external electronic device is referred to as an "external electronic device" to distinguish the same from the electronic device, but may also be referred to as an electronic device. In addition, the electronic device may also operate as an external electronic device.

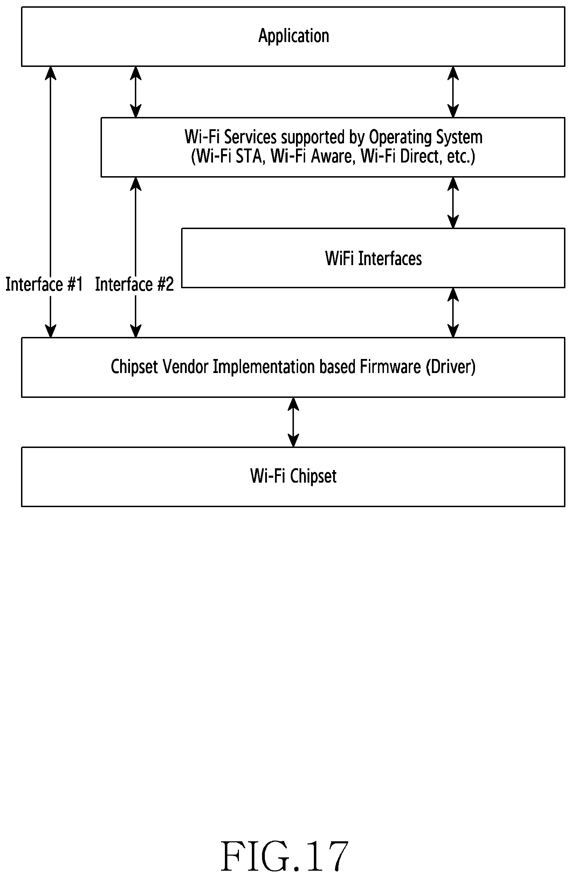

FIG. 17 is a diagram illustrating an interface of an electronic device according to an embodiment.

Referring to FIG. 17, interface #1 and interface #2 may be defined to reduce latency occurring in processing of audio data in the electronic device 300. In an embodiment, interface #1 may be defined between firmware (e.g., chipset vendor implementation-based firmware) of the electronic device 300 and an application layer. Further, in an embodiment, interface #2 may be defined between firmware (e.g., the chipset vendor implementation-based firmware) (or a driver) of the electronic device 300 and a Wi-Fi service (e.g., Wi-Fi services supported by an operating system) layer and between the Wi-Fi service layer and the application layer. According to an embodiment, timing synchronization function (TSF) information, for example, a TSF value, may be rapidly transferred to a higher layer, that is, the application layer, thus reducing a latency time.

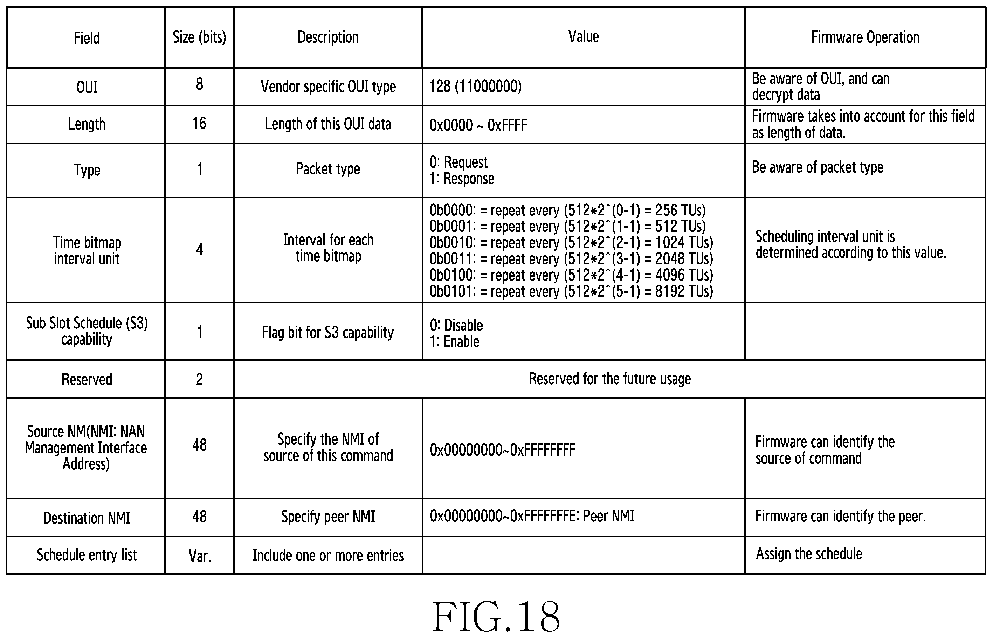

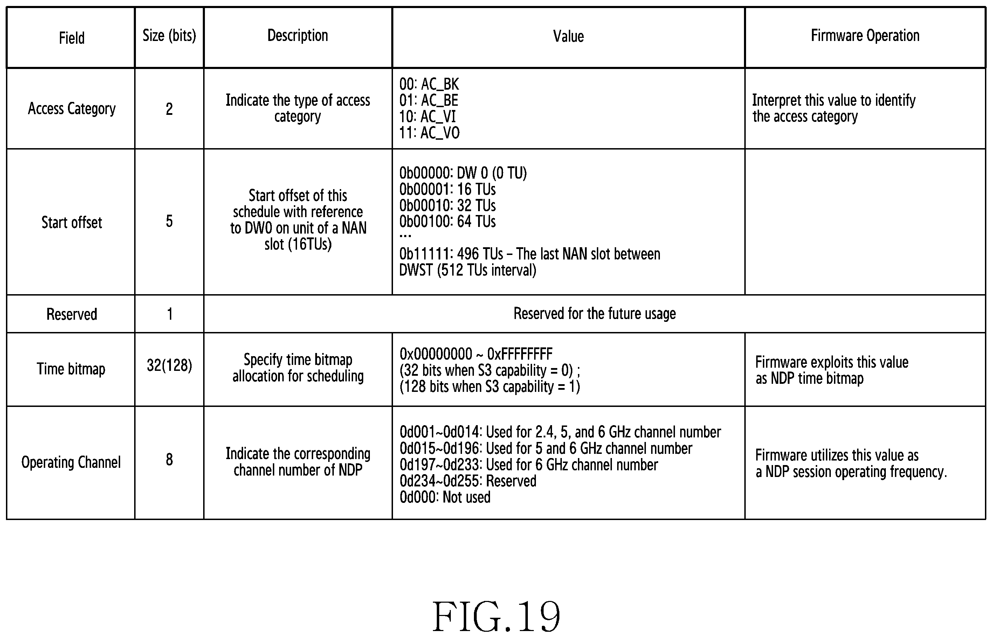

FIG. 18 and FIG. 19 are diagrams illustrating a command according to an embodiment.

Commands defined in FIG. 18 and FIG. 19 may be used for interface #1 and interface #2 defined in FIG. 17.

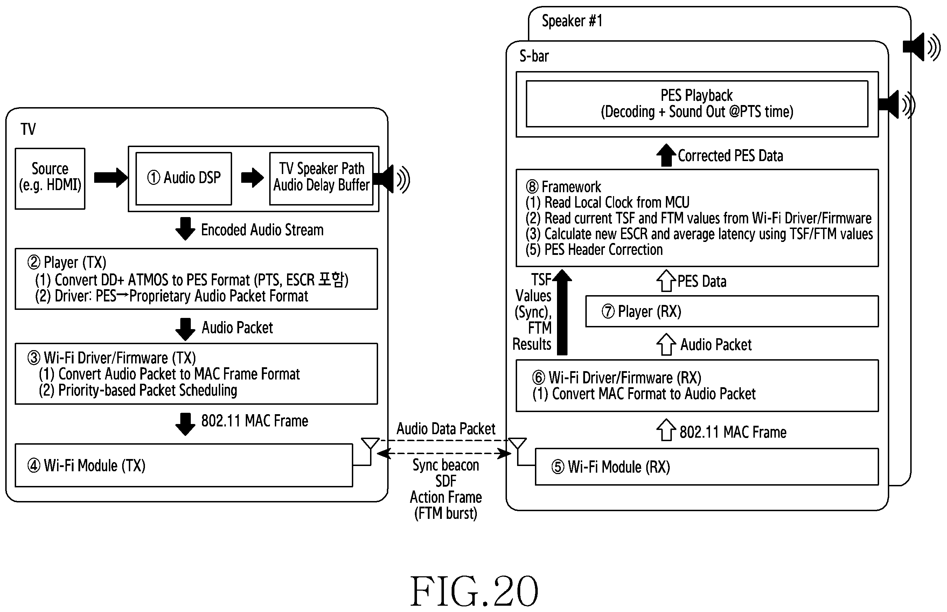

FIG. 20 is a diagram illustrating audio alignment in a framework according to an embodiment.

Referring to FIG. 20, in an electronic device, that is, a TV, an audio digital signal processor (DSP) may encode an audio signal and transmit an encoded audio stream to an audio player. In this case, when the audio signal processed by the DSP is played directly on the TV, audio synchronization mismatches or desynchronization may occur due to audio signal processing time in the electronic device, audio data packet transmission time, and audio signal processing time in an external device, such as a soundbar (S-bar) or a speaker (speaker #1). Therefore, to delay audio signal output from the electronic device, the electronic device may include an audio delay buffer.

A transmission (Tx) player of the TV may convert the encoded audio stream into a packet elementary stream (PES) format including present time stamp (PTS) information and elementary stream clock reference (ESCR) information. The PTS information is information regarding a time for the player to output audio, and the ESCR information is information regarding a reference time to which the player refers. Therefore, the PES information may be construed as including reference time information and information about when to output audio, based on the reference time information. Subsequently, the transmission (Tx) player of the TV may generate an audio packet including the PES format and transmit the same to a Wi-Fi driver/firmware.

The transmission (Tx) Wi-Fi driver/firmware of the TV converts the audio packet into an 802.11 MAC frame format. Here, an access category for the audio packet may be configured. Subsequently, the transmission (Tx) Wi-Fi driver/firmware of the TV may transmit the 802.11 MAC frame to a Wi-Fi module.

The transmission (Tx) Wi-Fi module of the TV may perform synchronization by periodically transmitting and receiving a synchronization beacon and an SDF to and from the external electronic device, that is, the soundbar (S-bar) or the speaker (speaker #1), in a DW. In an embodiment, the synchronization beacon may include timing synchronization function (TSF) information, for example, a TSF value. The transmission (Tx) Wi-Fi module of the TV and a reception (Rx) module Wi-Fi module of the soundbar (S-bar) may obtain the TSF information through transmission and reception of the synchronized beacon.

The transmission (Tx) Wi-Fi module of the TV and the reception (Rx) Wi-Fi module of the soundbar (S-bar) may perform a fine time measurement (FTM) procedure for ranging. More specifically, the transmission (Tx) Wi-Fi module of the TV and the reception (Rx) Wi-Fi module of the soundbar (S-bar) may transmit and receive a plurality of FTM frames (e.g., action frames for FTM) in a time window called a burst instance. Within the burst instance, the transmission (Tx) Wi-Fi module of the TV and the reception (Rx) Wi-Fi module of the soundbar (S-bar) may perform precise timing measurement, based on each FTM frame and an ACK thereof. More specifically, the transmission (Tx) Wi-Fi module of the TV and the reception (Rx) Wi-Fi module of the soundbar (S-bar) exchange FTM frames and ACK frames to measure a flight time or a round-trip time (RTT). In this case, a distance between the TV and the soundbar may be calculated by identifying departure time information about the FTM frame and arrival time information about the corresponding ACK frame. In an embodiment, the reception (Rx) Wi-Fi module of the soundbar (S-bar) may obtain FTM information, for example, an FTM value, as a result of the FTM procedure.

The transmission (Tx) Wi-Fi module of the TV transmits an audio data packet including an 802.11 MAC frame to the soundbar (S-bar) synchronized in time.

The reception (Rx) Wi-Fi module of the soundbar (S-bar) may receive the audio data packet from the TV and transmit the 802.11 MAC frame to a reception (Rx) Wi-Fi driver/firmware of the soundbar (S-bar).

The reception (Rx) Wi-Fi driver/firmware of the soundbar (S-bar) may convert the 802.11 MAC frame into an audio packet.

According to a related art, the reception (Rx) Wi-Fi driver/firmware of the soundbar (S-bar) transmits PES data included in the audio packet and the encoded audio stream to a framework of the sound bar (S-bar). The framework of the sound bar (S-bar) identifies an MCU local time and the PES data, and transmits the encoded audio stream to an audio DSP. The audio DSP decodes the encoded audio stream and outputs the audio signal, based on the PES data.

However, in an embodiment, the reception (Rx) Wi-Fi driver/firmware of the soundbar (S-bar) may identify the TSF value and the FTM value from the 802.11 MAC frame, and may transmit the TSF value and the FTM value directly to the framework.

The framework may identify the MCU local time, and may modify the PES data, based on the MCU local time, and the TSF value and the FTM value received from the Rx Wi-Fi driver/firmware. More specifically, the framework may calculate a new ESCR and an average latency. In an embodiment, the new ESCR may be calculated by Equation 1.$New ESCR = T \left(RX_TSF_value, MCU_Local_Time\right)$

That is, the new ESCR may be calculated based on the received TSF value and the MCU local time.

The framework may calculate the average latency, based on the TSF value and the FTM value. The average delay time may be used to calculate a PTS. In an embodiment, the framework may calculate the PTS in by the following equation.$PTS = P \left(New ESCR, Δ\right)$

That is, the PTS may be calculated based on the new ESCR and Δ. Here, Δ may include at least one of a maximum value among preconfigured delay requirements or the average latency calculated based on the TSF value and the FTM value.

In an embodiment, the framework may modify a PES header to include the modified PTS information and the new ESCR.

Subsequently, the soundbar (S-bar) decodes the audio stream encoded in the digital signal processor (DSP), and outputs the audio signal, based on the modified PES data.

According to an embodiment, audio playback time alignment may be performed by a higher layer, that is, the framework.

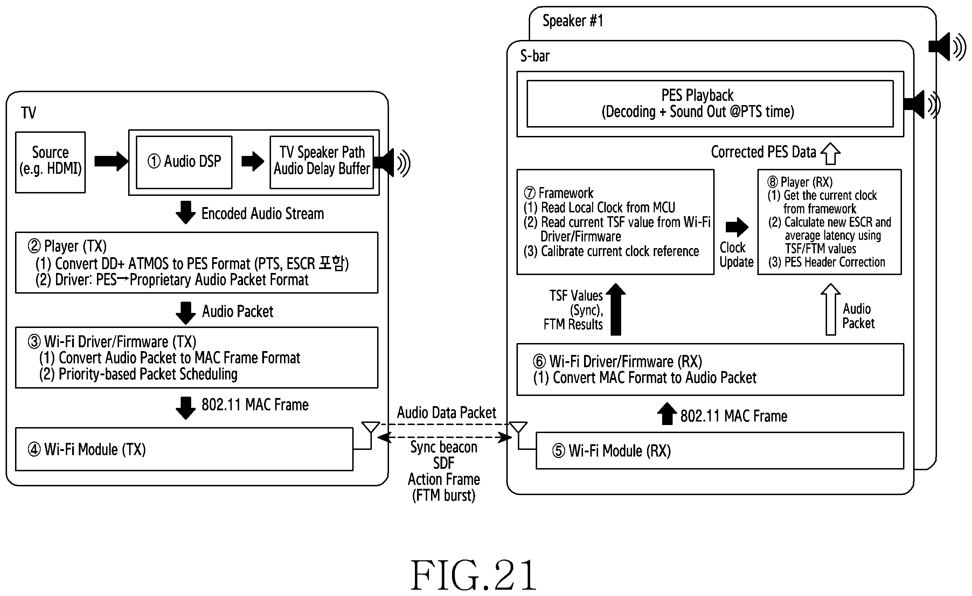

FIG. 21 is a diagram illustrating audio alignment in an audio player according to an embodiment.

Referring to FIG. 21, since an operation of a transmitting side, that is, a TV, is the same as that of the TV in FIG. 20, a description thereof is omitted.

In FIG. 21, a reception (Rx) Wi-Fi module of a soundbar (S-bar) may receive an audio data packet from the TV and transmit an 802.11 MAC frame to a reception (Rx) Wi-Fi driver/firmware of the soundbar (S-bar).

In an embodiment, the reception (Rx) Wi-Fi driver/firmware of the soundbar (S-bar) may identify a TSF value and an FTM value from the 802.11 MAC frame, and may transmit the TSF value and the FTM value directly to a framework. Here, the reception (Rx) Wi-Fi driver/firmware may also transmit the TSF value and the FTM value to a reception (Rx) player.

Unlike FIG. 20, FIG. 21 illustrates that the reception (Rx) player, instead of the framework, performs audio playback time alignment

The framework identifies an MCU local time, and obtains the MCU local time, and the TSF value and the FTM value from the reception (Rx) Wi-Fi driver/firmware. Subsequently, the framework calibrates a current clock reference and/or the MCU local time, based on the TSF value and/or the FTM value. The framework transmits an updated current time (clock) to the reception (Rx) player. Here, the framework may also the TSF value and the FTM value to the reception (Rx) player.

The reception (Rx) player may obtain the current time from the framework, and may modify PES data, based on the TSF value and the FTM value. More specifically, the reception (Rx) player may calculate a new ESCR and an average latency.

In an embodiment, a new ESCR may be calculated by the following equation.$New ESCR = T \left(RX_TSF_value, Updated_Current_Time\right)$

Here, Updated_Current_Time may include the updated current time received from the framework. The updated current time may include the current clock reference and/or the MCU local time calibrated based on the TSF value and/or the FTM value by the framework.

That is, the new ESCR may be calculated as a sum of the MCU local time and the received TSF value.

The reception (Rx) player may calculate the average latency, based on the TSF value and the FTM value. The average delay time may be used to calculate a PTS. In an embodiment, the reception (Rx) player may calculate the PTS by the following equation.$PTS = P \left(New ESCR, Δ\right)$

That is, the PTS may be calculated based on the new ESCR and Δ. Here, Δ may include at least one of a maximum value among preconfigured delay requirements and the average latency calculated based on the TSF value and the FTM value.

In an embodiment, the reception (Rx) player may modify a PES header to include modified PTS information and the new ESCR.

Subsequently, the soundbar (S-bar) decodes an audio stream encoded in a digital signal processor (DSP), and outputs an audio signal based on the modified PES data.

According to an embodiment, audio playback time alignment may be performed by a higher layer, that is, the framework.

According to an embodiment, audio playback time alignment may be performed by a higher layer, that is, the player.

According to an embodiment, a receiving device may transmit the TSF value from the Wi-Fi driver/firmware directly to the framework through a newly defined interface, thereby preventing internal delays and playing the audio signal at an accurate time.

Although an embodiment illustrates the TV as an electronic device and the soundbar (S-bar) or speaker (speaker #1) as an external electronic device, the electronic device and the external electronic device are not limited to these examples and may include various types of electronic devices. In an embodiment, the electronic device may include various electronic devices (e.g., a smartphone, an MP3 player, and an audio player) having an audio source, and the external electronic device may include various electronic devices (e.g., a speaker, a Bluetooth speaker, an earphone, an earbud, and a headphone) that receive an audio source from the electronic device and play the same.

An audio alignment method of an external electronic device according to an embodiment is as follows.

The external electronic device may perform discovering an electronic device included in a neighbor awareness networking (NAN) cluster by performing an NAN service discovery in a discovery window (DW), and establishing an NAN data path (NDP) session with the electronic device.

Further, the external electronic device may perform obtaining a timing synchronization function (TSF) value by receiving a synchronization signal from the electronic device in the DW, and obtaining an FTM value by performing a fine time measurement (FTM) procedure with the electronic device.

The external electronic device may perform performing playback time alignment of an audio signal, based on the TSF value and the FTM value.

In an embodiment, the operation of performing the playback time alignment of the audio signal may include obtaining a local time, directly receiving the TSF value and the FTM value from a Wi-Fi driver or Wi-Fi firmware through a first interface, obtaining a new ESCR value, based on the local time and the TSF value, obtaining an average latency, based on the FTM value, obtaining a present time stamp (PTS) value, based on the new ESCR value and the average latency, and determining a playback time of the audio signal, based on a PTS, which are performed by a framework of the external electronic device.

In an embodiment, the operation of performing the playback time alignment of the audio signal may include obtaining a local time, directly receiving the TSF value and the FTM value from the Wi-Fi driver or Wi-Fi firmware through a first interface, calibrating a current clock reference, and transmitting the TSF value, the FTM value, and an updated current time to a player, which are performed by the framework of the external electronic device. Here, receiving the TSF value, the FTM value, and the updated current time from the framework, obtaining a new ESCR value, based on the updated current time and the TSF value, obtaining an average latency, based on the FTM value, obtaining a present time stamp (PTS) value, based on the new ESCR value and the average latency, and determining a playback time of the audio signal, based on a PTS, which are performed by the player of the external electronic device, may be included.

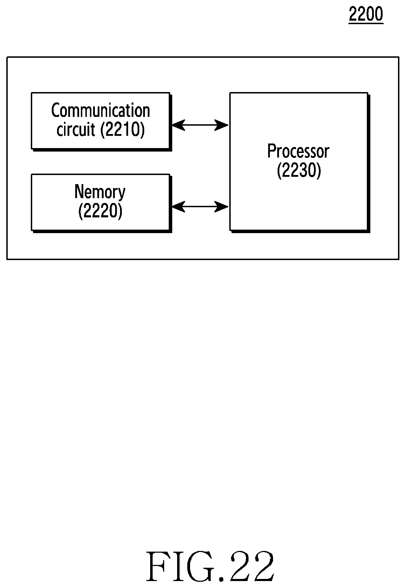

The external electronic device is referred to as an "external electronic device" to distinguish the same from the electronic device, but may also be referred to as an electronic device. In addition, the electronic device may also operate as an external electronic device. The external electronic device may include the same configuration as the electronic device 300 illustrated in FIG. 3, which is described with reference to FIG. 22.

FIG. 22 is a block diagram of an external electronic device according to an embodiment.

Referring to FIG. 22, the external electronic device 2200 (e.g., the electronic device 101 of FIG. 1) may include a communication circuit 2210 (e.g., the wireless communication module 192 of FIG. 1) that transmits and receives signals to and from an external electronic device via one or more antennas, a memory 2220 (e.g., the memory 130 of FIG. 1) that stores instructions for the external electronic device 2200, and a processor 2230 (e.g., the processor 120 of FIG. 1) that may be configured with one or more single-core processors or one or more multi-core processors.

The communication circuit 2210 may include various circuit structures used for modulation and/or demodulation of a signal in the external electronic device 2200. For example, the communication circuit 2210 may modulate a baseband signal into a radio-frequency (RF) signal to output the RF signal through an antenna (not shown), or may demodulate an RF signal received through the antenna into a baseband signal to transmit the baseband signal to the processor 2220.

The communication circuit 2210 may support at least one of various wired and wireless communication methods. For example, the communication circuit 2210 may be in a form of a chipset, or may be a sticker/barcode (e.g., a sticker including an NFC tag) including information necessary for communication. The communication circuit 2210 may support, for example, cellular communication, Wireless Fidelity (Wi-Fi), Wi-Fi Direct, Bluetooth, ultra-wideband (UWB), or near-field communication (NFC).

Various types of data, such as an application, a program including an instruction, and a file, may be installed and stored in the memory 2220. The processor 2230 may access the data stored in the memory 2220 to use the same, or may store new data in the memory 2220. In an embodiment, a program and data for transmitting and receiving audio data may be installed and stored in the memory 2220.

The processor 2230 may control an overall operation of the external electronic device 2200. In an embodiment, the processor 2230 may control other components included in the external electronic device 2200 such that the external electronic device 2200 performs audio alignment. For example, the processor 2230 may execute a program or an instruction stored in the memory 2220, read a file stored in the memory 2220, or store a new file in the memory 2220.

In an embodiment, the processor 2230 performing an operation may be the processor 2230 directly performing an operation, and may also include the processor 2230 controlling another component, for example, the communication circuit 2210, to perform an operation.

In an embodiment, the processor 2230 may perform audio alignment by executing a program stored in the memory 2220. Instructions stored in the memory 2200 may, when executed by the processor 2230, cause the external electronic device 2200 to perform at least discovering an electronic device included in a neighbor awareness networking (NAN) cluster by performing an NAN service discovery in a discovery window (DW), establishing an NAN data path (NDP) session with the electronic device, obtaining a timing synchronization function (TSF) value by receiving a synchronization signal from the electronic device in the DW, obtaining an FTM value by performing a fine time measurement (FTM) procedure with the electronic device, and performing playback time alignment of an audio signal, based on the TSF value and the FTM value.

In an embodiment, the instructions stored in the memory 2220 may, when executed by the processor 2230, cause the external electronic device 2200 to perform, by a framework of the external electronic device 2200, obtaining a local time, directly receiving the TSF value and the FTM value from a Wi-Fi driver or Wi-Fi firmware through a first interface, obtaining a new ESCR value, based on the local time and the TSF value, obtaining an average latency, based on the FTM value, obtaining a present time stamp (PTS) value, based on the new ESCR value and the average latency, and determining a playback time of the audio signal, based on a PTS.

In an embodiment, the instructions stored in the memory 2220 may, when executed by the processor 2230, cause the external electronic device 2200 to perform, by the framework of the external electronic device, obtaining a local time, directly receiving the TSF value and the FTM value from the Wi-Fi driver or Wi-Fi firmware through a first interface, calibrating a current clock reference, and transmitting the TSF value, the FTM value, and an updated current time to a player. Further, the instructions may cause the external electronic device to perform, by the player of the external electronic device 2200, receiving the TSF value, the FTM value, and the updated current time from the framework, obtaining a new ESCR value, based on the updated current time and the TSF value, obtaining an average latency, based on the FTM value, obtaining a present time stamp (PTS) value, based on the new ESCR value and the average latency, and determining a playback time of the audio signal, based on a PTS.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. In addition, the above respective embodiments may be employed in combination, as necessary.

## Claims

1. An electronic device comprising:
a communication circuit;
a processor; and
a memory storing instructions,
wherein the instructions stored in the memory, when executed by the processor, cause the electronic device to perform at least:
discovering a plurality of external electronic devices included in a neighbor awareness networking (NAN) cluster by performing an NAN service discovery in a discovery window (DW);
establishing respective NAN data path (NDP) sessions with the plurality of external electronic devices in a first frequency band;
scheduling a radio resource to periodically allocate the DW in a second frequency band and allocate audio data transmission periods for transmitting audio data to the plurality of external electronic devices through the respective NDP sessions in the first frequency band;
performing NAN synchronization and the NAN service discovery in the DW, and
transmitting the audio data to the plurality of external electronic devices through the respective NDP sessions in the audio data transmission periods.

2. The electronic device of claim 1, wherein the instructions stored in the memory, when executed by the processor, cause the electronic device to perform: scheduling the radio resource such that transmission intervals of the audio data are identical in the respective NDP sessions, based on at least one of a number of the NDP sessions, a size of the audio data, and a type of the audio data.

3. The electronic device of claim 2, wherein the instructions stored in the memory, when executed by the processor, cause the electronic device to perform: scheduling the radio resource such that the audio data transmission periods overlap for at least some of the respective NDP sessions.

4. The electronic device of claim 3, wherein the instructions stored in the memory, when executed by the processor, cause the electronic device to perform: scheduling the radio resource to communicate with an external electronic device not included in the NAN cluster or provide a service irrelevant to an NAN service by using at least one of the first frequency band and the second frequency band in a period in which the audio data is not transmitted and which is not the DW.

5. The electronic device of claim 3, wherein the instructions stored in the memory, when executed by the processor, cause the electronic device to perform: changing a priority for at least some of the respective NDP sessions in the overlapping periods, based on an access category.

6. The electronic device of claim 1, wherein the first frequency band is a 5GHz band or a 6GHz band, and
wherein the second frequency band is a 2.4GHz band.

7. The electronic device of claim 1, wherein the instructions stored in the memory, when executed by the processor, cause the electronic device to perform:
scheduling the radio resource to allocate an additional DW in a third frequency band;
performing the NAN synchronization and the NAN service discovery in the additional DW by switching the communication circuit from the first frequency band to the third frequency band in a period in which the additional DW is allocated; and
transmitting the audio data to the plurality of external electronic devices through the respective NDP sessions in the audio data transmission periods by switching the communication circuit from the third frequency band to the first frequency band in a period after the additional DW.

8. The electronic device of claim 1, wherein the instructions stored in the memory, when executed by the processor, cause the electronic device to perform:
establishing respective NDP sessions with the plurality of external electronic devices in the first frequency band and the second frequency band;
scheduling the radio resource to periodically allocate the DW in the second frequency band and the third frequency band and allocate audio data transmission periods for transmitting the audio data to the plurality of external electronic devices through the respective NDP sessions in the first frequency band and the second frequency band;
performing the NAN synchronization and the NAN service discovery in the DW by switching the communication circuit from the first frequency band to the third frequency band in a period in which the DW is allocated; and
transmitting the audio data to the plurality of external electronic devices through the respective NDP sessions in the audio data transmission periods by switching the communication circuit from the third frequency band to the first frequency band in a period after the DW.

9. The electronic device of claim 1, wherein the scheduling is performed in units of slots, each of the slots comprising a plurality of subslots, and
wherein the instructions stored in the memory, when executed by the processor, cause the electronic device to perform: in case that a period in which transmission of the audio data is not scheduled occurs in a slot allocated to a first external electronic device, allocating an idle subslot, in which audio data for the first external electronic device is not transmitted, to a second external electronic device by performing scheduling in units of subslots.

10. The electronic device of claim 9, wherein the instructions stored in the memory, when executed by the processor, cause the electronic device to perform: in case that the transmission of the audio data fails in the slot allocated to the first external electronic device, retransmitting the audio data in the idle subslot by performing scheduling in units of subslots.

11. A method of an electronic device, the method comprising:
discovering a plurality of external electronic devices included in a neighbor awareness networking (NAN) cluster by performing an NAN service discovery in a discovery window (DW);
establishing respective NAN data path (NDP) sessions with the plurality of external electronic devices in a first frequency band;
scheduling a radio resource to periodically allocate the DW in a second frequency band and allocate audio data transmission periods for transmitting audio data to the plurality of external electronic devices through the respective NDP sessions in the first frequency band;
performing NAN synchronization and the NAN service discovery in the DW; and
transmitting the audio data to the plurality of external electronic devices through the respective NDP sessions in the audio data transmission periods.

12. The method of claim 11, wherein the scheduling of the radio resource comprises scheduling the radio resource such that transmission intervals of the audio data are identical in the respective NDP sessions, based on at least one of a number of the NDP sessions, a size of the audio data, and a type of the audio data.

13. The method of claim 12, wherein the scheduling of the radio resource comprises:
scheduling the radio resource such that the audio data transmission periods overlap for at least some of the respective NDP sessions; and
scheduling the radio resource to communicate with an external electronic device not included in the NAN cluster or provide a service irrelevant to an NAN service by using at least one of the first frequency band and the second frequency band in a period in which the audio data is not transmitted and which is not the DW.

14. The method of claim 13, further comprising changing a priority for at least some of the respective NDP sessions in the overlapping period, based on an access category.

15. The method of claim 11, wherein the scheduling of the radio resource comprises scheduling the radio resource to allocate an additional DW in a third frequency band, and
wherein the method further comprises:
performing the NAN synchronization and the NAN service discovery in the additional DW by switching a communication circuit from the first frequency band to the third frequency band in a period in which the additional DW is allocated; and
transmitting the audio data to the plurality of external electronic devices through the respective NDP sessions in the audio data transmission periods by switching the communication circuit from the third frequency band to the first frequency band in a period after the additional DW.
